# EUROPÄISCHE PATENTSCHRIFT

(11) **EP 1 819 942 B1**
(45) Veröffentlichungstag und Bekanntmachung des Hinweises auf die Patenterteilung: **31.03.2010**
(21) Anmeldenummer: 05815424.6
(22) Anmeldetag: 01.12.2005
(51) Int. Cl.: F16H 1/32

(54) **GETRIEBE**
GEAR MECHANISM
TRANSMISSION

(30) Priorität: 03.12.2004 EP 04028709
(43) Veröffentlichungstag der Anmeldung: 22.08.2007
(73) Patentinhaber: Spinea s.r.o., 08005 Presov (SK)
(72) Erfinder: JANEK, Bartolomej, 080 01 Presov (SK)
(74) Vertreter: Jeck, Anton
(86) Internationale Anmeldenummer: PCT/EP2005/012823
(87) Internationale Veröffentlichungsnummer: WO 2006/058743

(56) Entgegenhaltungen:
- EP-A- 0 101 349
- EP-A- 0 444 790
- FR-A- 1 042 574
- GB-A- 956 383
- NL-A- 9 400 140
- US-A- 3 013 447
- US-A- 4 348 918
- US-A- 4 640 154
- US-A- 5 908 372

## Beschreibung

Die Erfindung betrifft ein Getriebe gemäß dem Oberbegriff des Anspruchs 1.

Aus US 4,348,918 ist ein zweistufiges Getriebe bekannt. Die erste Stufe besteht aus einem ersten und einem zweiten Rad mit ineinander greifender Außenverzahnung, wobei das zweite Rad mit einer Kurbelwelle unverdrehbar verbunden ist. Die zweite Stufe besteht aus einem Trägerkörper mit Innenverzahnung, welche mit der Außenverzahnung der Räder der ersten Stufe kämmt. Die Räder mit Außenverzahnung sind mit Öffnungen versehen, in denen sie auf den Kurbelteilen der Kurbelwelle drehbar gelagert sind. Der Trägerkörper ist auf miteinander fest verbundenen Ausgangskörpern drehbar gelagert, welche mit Öffnungen versehen sind, in denen die Enden der Kurbelwelle drehbar gelagert sind. Die Kurbelwelle stellt im Hinblick auf die Funktion eine die Antriebsleistung übertragende Komponente dar.

Ein Nachteil des bekannten Getriebes besteht darin, dass die Kurbelwelle auf vier Lagern in Öffnungen von vier verschiedenen Komponenten drehbar gelagert ist. Eine solche mehrfache Lagerung der Kurbelwelle ist unbestimmt, das heißt, dass die Herstellungstoleranzen der Öffnungen, in denen die Kurbelwelle gelagert ist voneinander abhängig sind und genügend klein gehalten werden müssen, was die Getriebeherstellung sehr kompliziert macht. Infolge möglicher unterschiedlicher Herstellungstoleranzen kann es zu einer unerwünschten Erhöhung des Laufgeräuschs, zu Vibrationen und zu einer vorzeitigen Schädigung des Getriebes kommen.

Zur Sicherung einer ausreichenden Leistungskapazität ist das Getriebe in der Regel mit mehr als einer Kurbelwelle ausgerüstet. Wegen der hohen Anforderungen bezüglich der Herstellungstoleranzen und der Anzahl der Kurbelwellen in dem Getriebe ist die Herstellung äußerst kostspielig. Ähnlich ist wegen der erforderlichen gegenseitigen Abstimmung der Herstellungstoleranzen der einzelnen Teile auch die Montage der Einrichtung kompliziert. Die komplizierte Form der Kurbelwelle macht die Verwendung einer aus der Massenproduktion von Lagern bekannten leistungsstarken Technologie nicht möglich, eine gleichzeitige Bearbeitung mehrerer Kurbelwellen ist ebenfalls nicht möglich. Dieser Umstand begrenzt die Möglichkeiten einer Kostensenkung bei der Herstellung derartiger Kurbelwellen.

Die Oberfläche der exzentrisch zueinander angeordneten Teile der Kurbelwelle ist in Bezug auf Ermüdung die meistbeanspruchte Fläche des gesamten Getriebes. Eine Inaugenscheinnahme oder Inspektion der Oberflächen der exzentrisch zueinander angeordneten Teile der Kurbelwelle setzt eine Demontage des gesamten Getriebes voraus. Das macht den Betrieb und die Wartung derartiger Getriebe kompliziert und kostspielig. Im Falle eines Schadens muss meist die Kurbelwelle ersetzt werden, die in Bezug auf die Herstellungskosten besonders ins Gewicht fällt.

Die drehbare Lagerung des Trägerkörpers auf dem Ausgangskörperpaar ist innen vorgesehen, was den Innenraum des Getriebes in radialer Richtung einschränkt. Folglich können die im Inneren des Getriebes angeordneten Komponenten nur klein und nicht genügend robust dimensioniert werden, was wiederum die Leistungsdaten des Getriebes, wie etwa das maximal übertragbare Drehmoment, die maximal übertragbare Leistung, die Torsionssteifigkeit usw. begrenzt.

Aus FR 1.042.574 ist ein auch als Hypoiykloidgetriebe bezeichnetes Planetengetriebe bekannt. Auf einer Eingangswelle mit einem exzentrischen Abschnitt ist ein Rad mit Außenverzahnung drehbar gelagert. Das Rad mit Außenverzahnung ist in einem fest stehenden Trägerkörper mit Innenverzahnung angeordnet. Das Rad mit Außenverzahnung weist gegenüber dem Trägerkörper mit Innenverzahnung einen um etwa die doppelte Exzentrizität des exzentrischen Abschnitts der Eingangswelle kleineren Durchmesser auf. Beidseitig des Rades mit Außenverzahnung und innerhalb des Trägerkörpers mit Innenverzahnung sind mit einer Ausgangswelle verbundene Ausgangskörper angeordnet. Mittels einer Einrichtung wird die durch eine Drehung der Eingangswelle entstehende, überlagerte Dreh- und Exzenterbewegung des Rads mit Außenverzahnung in eine Drehbewegung der Ausgangskörper und damit der Ausgangswelle transformiert. Diese Einrichtung umfasst an den Ausgangskörpern angeordnete, sich in Achsrichtung der Eingangswelle erstreckende zylindrische Körper, welche durch Öffnungen an dem Rad mit Außenverzahnung hindurchführen und die beiden Ausgangskörper fest miteinander verbinden. In den Öffnungen am Rad mit Außenverzahnung sind Organe in Form von Exzenterringhülsen angeordnet, welche sowohl gegenüber dem Rad mit Außenverzahnung, als auch gegenüber den zylindrischen Körpern drehbar gelagert sind.

Die in Bezug auf die Außenabmessungen spezifischen Leistungsdaten eines derartigen Getriebes, wie etwa das maximal übertragbare Drehmoment, die maximal übertragbare Leistung, die Torsionssteifigkeit usw. sind im Wesentlichen von drei Randbedingungen abhängig:
- dem Abstand der die überlagerte Dreh- und Exzenterbewegung des Rads mit Außenverzahnung in eine Drehbewegung des Ausgangskörpers transformierenden Einrichtung von der Achse der Eingangswelle,
- den Durchmesser der zylindrischen Körper,
- die Wandstärken der die zylindrischen Körper bzw. die Organe aufnehmenden Öffnungen.

Aufgrund des geringen Abstands der die überlagerte Dreh- und Exzenterbewegung des Rads mit Außenverzahnung in eine Drehbewegung des Ausgangskörpers transformierenden Einrichtung von der Achse der Eingangswelle sind diese spezifischen Leistungsdaten bei dem aus FR 1.042.574 bekannten Getriebe für moderne Anwendungen zu gering. Darüber hinaus ist der Aufbau dieses Getriebes in Bezug auf seine Montier- und Demontierbarkeit nicht optimal, da Wartungsarbeiten oder Inspektionen der Getriebekomponenten eine vollständige Demontage des Getriebes voraussetzt. So ist es beispielsweise nicht möglich, ohne eine vollständige Demontage des gesamten Getriebes das Rad mit Außenverzahnung oder die Organe der Transformationseinrichtung in Augenschein zu nehmen.

Aus EP 101 349 A1 ist ein Planetengetriebe bekannt, bei dem eine Eingangswelle zwei exzentrische Abschnitte aufweist, auf denen jeweils ein Rad mit Außenverzahnung drehbar gelagert ist. Die Räder mit Außenverzahnung kämmen durch Drehen der Eingangswelle mit einem Trägerkörper mit Innenverzahnung. Die dadurch entstehende kombinierte Dreh- und Exzentrebewegung wird mittels einer Einrichtung in eine Drehbewegung eines Ausgangskörpers transformiert. Diese Einrichtung umfasst an dem Ausgangskörper angeordnete, sich in Achsrichtung der Eingangswelle erstreckende zylindrische Körper, welche durch an den Rädern mit Innenverzahnung angeordnete Öffnungen hindurchragen, sowie gegenüber den zylindrischen Körpern und gegenüber den Rädern mit Außenverzahnung drehbar gelagerten Organen in Form von Hülsten mit zwei an seiner Außenseite exzentrisch zueinander versetzten Abschnitten. Durch den geringen Abstand der die überlagerte Dreh- und Exzenterbewegung des Rads mit Außenverzahnung in eine Drehbewegung des Ausgangskörpers transformierenden Einrichtung von der Achse der Eingangswelle sind die spezifischen Leistungsdaten eines derartigen Getriebes zu gering. Darüber hinaus ist der Herstellungsaufwand eines derartigen Getriebes insbesondere aufgrund der nur kompliziert herstellbaren, exzentrisch zueinander versetzte Außenflächen aufweisenden Organe der Transformationseinrichtung sehr hoch. Zusätzlich ergeben sich die bereits weiter oben beschriebenen Nachteile in Bezug auf Wartung und Inspektion.

Ausgehend von dem obigen Stand der Technik, liegt der Erfindung die Aufgabe zugrunde, das gattungsgemäße Getriebe ohne unangemessenen konstruktiven Aufwand so zu verbessern, dass bei im wesentlichen unveränderten Außenabmessungen und einfacher Montage des Getriebes, seine Leistungsdichte merklich erhöht wird.

Die gestellt Aufgabe wird erfindungsgemäß durch die Merkmale des Anspruches 1 gelöst.

Man erkennt, dass die Erfindung jedenfalls dann verwirklicht ist, wenn die mit dem Rad verbunden zylindrischen Körper in die Öffnungen des Augangskörpers hineinragen und dort in den hohlzylindrischen Organen betriebsgemäß gelagert sind. In den Rädern sind Öffnungen für die zylindrischen Körper ausgebildet, die in diese Öffnungen z. B. kaltgepresst werden. Dadurch, dass die Organe in den Ausgangskörpern angeordnet sind, kann das Getriebe in Achsrichtung zusammengebaut oder zerlegt werden.

Wesentlich ist bei dem erfindungsgemäßen Getriebe, dass die sich zwischen dem Rad mit Außenverzahnung und dem Ausgangskörper befindende Einrichtung, die die Planetenbewegung der Räder mit Außenverzahnung in eine Rotationsbewegung des Ausgangskörpers umsetzt, einen mit dem Rad mit Außenverzahnung betriebsgemäß verbundenen, zylindrischen Körper, eine an dem Ausgangskörper angeordnete Öffnung, sowie ein in der Öffnung drehbar gelagertes Organ umfasst. Eine betriebsgemäße Verbindung des Körpers mit dem Rad mit Außenverzahnung ist beispielsweise durch eine einteilige Ausführung des Rads mit Außenverzahnung und des Körpers, oder durch eine feste Anordnung des Körpers an dem Rad mit Außenverzahnung denkbar.

Der zylindrische Körper ist in Richtung der Achse des Rads mit Innenverzahnung orientiert. Der zylinderförmige Körper ist vorzugsweise als Zapfen mit kreisrundem Querschnitt ausgebildet und mit dem Rad mit Außenverzahnung verbunden.

Das Rad mit Außenverzahnung ist auf dem Exzenter drehbar gelagert. Es weist hierzu eine zentrale Öffnung auf, in die der Exzenter hinein geschoben werden kann.

Das auf dem rotierenden Exzenter angeordnete, außenverzahnte Rad läuft in dem Innenzahnkranz des innenverzahnten Rads um und führt dabei eine überlagerte Dreh- und Exzenterbewegung aus.

Der Kern der Erfindung ist dabei, dass diese überlagerte Bewegung mittels des Organs, das Teil der Transformationseinrichtung ist, direkt in eine Drehbewegung des Ausgangskörpers und damit der Ausgangswelle umgesetzt werden kann, wobei das Organ in einer Öffnung an dem Ausgangskörper drehbar gelagert ist, und der in das Organ ragende zylindrische Körper an dem Rad mit Außenverzahnung angeordnet ist.

Die Erfindung weist gegenüber dem Stand der Technik den Vorteil auf, dass durch die Anordnung der zylindrischen Körpers am Rad mit Außenverzahnung dessen Anordnung in maximalem Abstand zur Achse der Eingangswelle radial ganz außen am Außenumfang des Rads mit Außenverzahnung möglich ist. Beim Stand der Technik, bei dem die Öffnung am Rad mit Außenverzahnung angeordnet ist, ist dieser maximale radiale Abstand dadurch begrenzt, dass der zylindrische Körper mindestens um einen der Exzentrizität der Eingangswelle zuzüglich der mindestens erforderlichen Wandstärke der Öffnung entsprechenden Abstand vom Außenumfang des Rads mit Außenverahnung beabstandet angeordnet werden muss. Somit ermöglicht die Erfindung, bei gegenüber dem Stand der Technik gleich bleibenden Außenabmessungen eines derartigen Getriebes einen größeren Abstand zwischen der die kombinierte Dreh- und Exzenterbewegung des Rads mit Außenverzahnung und der Achse der Eingangswelle, wodurch bei gegenüber dem Stand der Technik gleich bleibendem Querschnitt des zylindrischen Körpers und einer gleich bleibenden Materialbeanspruchung desselben ein höheres Drehmoment übertragen werden kann.

Beim erfindungsgemäßen Getriebe ist zudem der Durchmesser des Ausgangskörpers nicht durch den Innendurchmesser des Rads mit Innenverzahnung beschränkt, was auch bei ganz am Umfang des Rads mit Außenverzahnung angeordnetem zylindrischen Körper eine ausreichend hohe Wandstärke der in dem Ausgangskörper angeordneten, den zylindrischen Körper sowie das Organ aufnehmende Öffnung garantiert. Darüber hinaus ist es bei dem erfindungsgemäßen Getriebe nunmehr möglich, den oder die Ausgangskörper stirnseitig an dem Rad mit Innenverzahnung zu lagern, was wiederum bei gleich bleibenden Außenabmessungen des Getriebes einen größeren Durchmesser des Ausgangskörpers und damit eine ausreichend große Wandstärke der in dem Ausgangskörper angeordneten Öffnung sicherstellt.

Ein weiterer Vorteil des erfindungsgemäßen Getriebes besteht darin, dass die die Planetenbewegung des Rads transformierende Einrichtung aus Komponenten unkomplizierter Form hergestellt werden kann, die mittels hochproduktiven, bei der Lagerfertigung verwendeten Technologien hergestellt werden können, wodurch eine wesentliche Senkung der Herstellungskosten gegenüber dem Stand der Technik erreicht werden kann.

So ist der zylinderförmige Körper vorzugsweise durch einen im Querschnitt kreisförmigen Zapfen gebildet, der aus einem Stangenhalbzeug hergestellt werden kann und auf hochproduktiven spitzenlosen Rundschleifmaschinen geschliffen werden kann. Ebenso besteht das Organ vorzugsweise aus einem Exzenterring, dessen Innenflächenachse entgegen der Außenflächenachse um einen Abstand, der der Exzentrizität entspricht, versetzt ist. Seine Außenfläche kann durch hochproduktives spitzenloses Schleifen und die Stirnflächen durch hochproduktives, beim Schleifen der Lagerringstirnflächen verwendetes Schleifen bearbeitet werden.

Beim Drehen und Schleifen der Exzenterring-Innenfläche kann ein mehrfacher Fertigungsprozess angewendet werden, bei dem mehrere Exzenterringe gleichzeitig gedreht und geschliffen werden. Ein Vorteil des gleichzeitigen Schleifens von Innenflächen mehrerer Exzenterringe besteht darin, dass jeder Ring mit der gleichen Exzentrizität bearbeitet wird, was die Voraussetzung für einen gleichmäßigen und ruhigen Getriebelauf ist.

Eine besondere Eigenschaft des erfindungsgemäßen Getriebes ist, dass im Fall einer Beschädigung oder einer erforderlichen Inaugenscheinnahme der die Planetenbewegung des Rads transformierenden Einrichtung diese ohne Notwendigkeit einer Demontage des gesamten Getriebes ausgebaut werden kann.

Ein zusätzlicher Vorteil des erfindungsgemäßen Getriebes besteht darin, dass die Leistung über zwei voneinander unabhängige Übertragungswege übertragen werden kann, von denen jeder aus einem Rad mit Außenverzahnung, einer Transformationseinrichtung und einem Ausgangskörper besteht. Das macht einen Betrieb des Getriebes auch ohne eine gegenseitige, feste Verbindung der Ausgangskörper möglich. Außerdem entfallen Schwierigkeiten, die aus der gegenseitigen Beeinflussung der Toleranzen der Lagerung der Transformationseinrichtung folgen und die bereits im Stand der Technik diskutiert worden sind.

Dabei ist zwischen den wahlweise miteinander verbundenen Ausgangskörpern mindestens ein Rad mit Außenverzahnung gelagert. Eine Verbindung der Ausgangskörper kann beispielsweise mittels mindestens eines Querelements verwirklicht werden, das mit einem Spiel durch eine axiale Öffnung des Rads mit Außenverzahnung so geführt wird, dass die beiden Ausgangskörper ein gegenseitig unverdrehbares Paar bilden. Das Querelement bildet entweder einen integralen Bestandteil mindestens eines Ausgangskörpers, oder ist als eine selbständige, mindestens mit einem Ausgangskörper fest verbundene Komponente ausgeführt. An der Stirnseite des Querelements kann eine Gewindebohrung und eine Bohrung für eine Schraube und einen Stift vorgesehen sein, mit deren Hilfe die Ausgangskörper fest verbunden sind.

Die wahlweise fest miteinander verbundenen Ausgangskörper sind dabei vorzugsweise in oder an dem Rad mit Innenverzahnung drehbar gelagert. Das Rad mit Innenverzahnung kämmt mit dem Rad mit Außenverzahnung. Die Innenverzahnung kann durch im Querschnitt kreisförmige Zapfen gebildet sein, die in Nuten mit einem halbkreisförmigem Querschnitt eingelegt sind. Die Achse des Rades mit Außenverzahnung ist gegenüber der Achse des Rades mit Innenverzahnung um einen der Exzentrizität entsprechenden Abstand versetzt.

Vorzugsweise sind die Teile der Einrichtung formschlüssig miteinander verbindbar.

Eine vorteilhafte Ausgestaltung der Erfindung sieht vor, dass der zapfenförmige und mit Abstand zur Längsachse der Eingangswelle an dem Rad mit Außenverzahnung angeordnete Körper in die Öffnung am Ausgangskörper hineinragt.

Eine vorteilhafte Ausgestaltung der Erfindung sieht vor, dass das Organ hohlzylinderförmig ausgebildet ist.

Eine vorteilhafte Ausgestaltung der Erfindung sieht vor, dass das Organ die Form einer Hülse aufweist, die den Raum zwischen dem Körper und der Öffnung spielfrei ausfüllt.

Eine andere vorteilhafte Ausgestaltung der Erfindung sieht vor, dass die Außen- und Innenumhüllung des Organs zylindrisch ausgeführt ist, wobei die Achse der Öffnung mit der Achse der Außenfläche des Organs zusammenfällt und der Abstand der Achse der Außenfläche des Organs von der Achse der zylindrischen Innenumhüllung der Exzentrizität entspricht.

Das Organ weist dabei vorzugsweise die Form eines Rings mit einer Innen- und einer Außenfläche auf, wobei die Achse seiner Innenfläche entgegen der Achse seiner Außenfläche um einen Abstand, der der Exzentrizität entspricht, versetzt ist. Eine derartige Form wird auch als Exzenterring bezeichnet. Das Organ kann so den exzentrischen Bewegungsanteil der kombinierten Dreh- und Exzenterbewegung des Rades mit Außenverzahnung, den auch der in dem Organ gelagerte und fest mit dem Rad mit Außenverzahnung verbundene zylindrische Körper ausführt, ausgleichen. Das Organ ist dabei sowohl gegenüber dem zylinderförmigen Körper, als auch gegenüber der Öffnung drehbar gelagert. Die drehbare Lagerung des Organs in der außermittigen Öffnung des Ausgangskörpers ist entweder eine Wälz- oder eine Gleitlagerung, die drehbare Lagerung des zylinderförmigen Körpers im Organ ist ebenfalls eine Wälz- oder eine Gleitlagerung.

Eine andere vorteilhafte Ausgestaltung der Erfindung sieht vor, dass mehrere, vorzugsweise zwei, drei, vier, fünf oder sechs Körper vorgesehen sind, die um die Längsachse der Eingangswelle verteilt sind und mit einer entsprechenden Anzahl von Organen in betrieblicher Verbindung stehen. Durch die Verwendung mehrerer Körper und Organe zur Transformation der kombinierten Dreh- und Exzenterbewegung des außenverzahnten Rades in eine Drehbewegung des Ausgangskörpers können die Belastungen, insbesondere Wechselbelastungen, der einzelnen Teile des Getriebes, insbesondere im Hinblick auf Biege- und Torsionsbeanspruchung, Lochleibung und Lagerbelastung verringert werden.

Eine andere vorteilhafte Ausgestaltung der Erfindung sieht vor, dass die axiale Länge der Körper sowie die axiale Länge der Organe so gewählt ist, dass sie in etwa der Dicke des Ausgangskörpers entspricht.

Eine zusätzliche vorteilhafte Ausgestaltung der Erfindung sieht vor, dass die Verbindung zwischen den Körpern und den zugeordneten Organen durch Steckverbindungen in axialer Richtung herstellbar ist.

Eine zusätzliche vorteilhafte Ausgestaltung der Erfindung sieht vor, dass mindestens zwischen den planparallelen Stirnseiten des Ausgangskörpers und des Rades mit Innenverzahnung mindestens ein Axialwälzlager angeordnet ist, über das der Ausgangskörper und das Rad gegenseitig abgestützt sind. Darüber hinaus lässt sich so eine besonders kompakte und robuste Ausführung des Getriebes erzielen.

Eine zusätzliche vorteilhafte Ausgestaltung der Erfindung sieht vor, dass das Organ die Form einer exzenterringförmigen Hülse aufweist und in dem Raum zwischen dem Körper und der Öffnung angeordnet ist, wobei zwischen dem Körper und dem Organ und/oder zwischen dem Organ und der Öffnung jeweils ein Wälzlager angeordnet ist.

Eine andere, besonders vorteilhafte Ausgestaltung der Erfindung sieht vor, dass der exzentrische Abschnitt der Eingangswelle mindestens aus einem um die Exzentrizität gegenüber der Längsachse der Eingangswelle parallel versetzten zylinderförmigen Kurbelzapfen besteht, dessen Durchmesser mindestens dem Durchmesser der Antriebswelle zuzüglich dem doppelten Wert der Exzentrizität entspricht. Der Kurbelzapfen bildet dabei die Laufbahn für zwischen dem Kurbelzapfen und dem Rad mit Außenverzahnung angeordnete Wälzkörper. Durch die Ausführung des Kurbelzapfens mit einem mindestens dem Durchmesser der Eingangswelle zuzüglich der doppelten Exzentrizität entsprechenden Durchmesser kann die Eingangswelle und der Kurbelzapfen aus einem Stück hergestellt werden. Bei der Montage und Demontage kann die Antriebswelle an einem Stück in das Getriebe hinein- und aus dem Getriebe herausgezogen werden. Sind zwei oder mehr Kurbelzapfen vorgesehen, so sind diese gleichmäßig über den Umfang der Eingangswelle versetzt zueinander angeordnet.

Das Wesen des erfindungsgemäßen Getriebes besteht dabei darin, dass die Eingangswelle mindestens mit einem exzentrischen Teil, vorzugsweise einem Kurbelzapfen versehen ist. Im Falle zweier exzentrischer Teile sind diese gegenseitig um 180° oder annähernd 180° gegeneinander verdreht. Die Kurbelzapfenachse ist entgegen der Eingangswellenachse um einen Abstand, der der Exzentrizität des Kurbelzapfens entspricht versetzt.

Wesentlich ist dabei, dass anstelle der aufwändigen Herstellung einer Kurbelwelle, bei der die zueinander versetzten Kurbelabschnitte durch Schmieden hergestellt und miteinander verbunden werden, der Kurbelzapfen zusammen mit der Eingangswelle als ein Drehteil relativ einfach hergestellt werden kann. Die Eingangswelle und der Kurbelzapfen weisen eine gemeinsame Mantelfläche auf, wobei die Eingangswelle den Kurbelzapfen exzentrisch durchdringt. Demgegenüber weisen bei einer Kurbelwelle die Eingangswelle und der Kurbelabschnitt keine gemeinsame Mantelfläche auf und die Eingangswelle verläuft mindestens teilweise außerhalb des Kurbelabschnitts.

Eine besonders vorteilhafte Ausgestaltung der Erfindung sieht vor, dass der Ausgangskörper stirnseitig an dem Rad mit Innenverzahnung drehbar gelagert ist.

Das Rad mit Innenverzahnung weist dabei an den an die Ausgangskörper anliegenden Seiten zylinderförmige radiale Innenflächen und gleichzeitig mindestens an einer Stirn-Außenseite eine axiale Kreisringfläche auf, die normal zur Achse des Rades mit Innenverzahnung ausgerichtet ist. Der Querabstand der axialen Kreisringflächen am Rad mit Innenverzahnung bestimmt dessen Dicke.

Ein Vorteil der Anordnung der axialen Kreisringflächen des Rads mit Innenverzahnung an dessen Außen-Stirnseite ist, dass diese Anordnung dessen Innenraum in radialer Richtung bei unveränderten Außenabmessungen vergrößert. Der größere Innenraum macht eine robustere Konstruktion der Getriebekomponenten möglich, wodurch die Funktionsparameter des Getriebes, wie z.B. die Momentkapazität, Leistungsdichte, Torsionssteifigkeit u.a. höhere Werte entgegen dem technischen Stand erreichen.

Im Raum zwischen den einander zugewandten Axialflächen des Ausgangskörpers und des Rades mit Innenverzahnung befinden sich dabei vorzugsweise zylinderförmige Wälzelemente, deren Achsen quer zur Achse des Rades mit Innenverzahnung ausgerichtet sind. Die Axialfläche des Ausgangskörpers und die Axialfläche des Rads mit Innenverzahnung können entsprechend gewölbt sein, um Kantenspannungen an den Enden der Wälzelemente, die sich zwischen diesen Flächen befinden, zu beseitigen. Ebenso ist denkbar, Kugeln zu verwenden. An den gegeneinander anliegenden Axialflächen des Ausgangskörpers und dem Rad mit Innenverzahnung können Lagerlaufbahnen zur Lagerung der kugelförmigen bzw. tonnenförmigen Wälzelemente ausgebildet sein.

Die Wälzelemente zwischen den anliegenden Axialflächen des Ausgangskörpers und des Rades mit Innenverzahnung sind dabei vorzugsweise in hierfür vorgesehenen Aussparungen des Lagerkäfigs gelagert. Der Lagerkäfig weist dabei mindestens eine Stirnfläche und eine Innenfläche auf, mit der er auf der Radialfläche des Ausgangskörpers aufliegt. Der Lagerkäfig ist dabei auf der Radialfläche des Ausgangskörpers drehbar gelagert. Die Aussparungen des Lagerkäfigs sind derart ausgebildet, dass ein radiales Herausfallen der Wälzelemente aus dem Lagerkäfig verhindert wird.

Der Durchmesser des Teilkreises der an den Außen-Axialflächen angebrachten Wälzelemente ist dabei im Vergleich zur Anordnung der Wälzelemente an der inneren Axialfläche ebenfalls größer. Folglich steigt bei gleichen Außenabmessungen des Getriebes der Wert der Kippsteifigkeit und der Momentkapazität entgegen dem bisherigen Stand der Technik wesentlich an.

Ferner gehört zum Vorteil der Drehlagerung der Ausgangskörper gemäß der Erfindung, dass der Unterschied der Umfangsgeschwindigkeit des Käfigs mit den Wälzelementen auf den Wälzflächen des Ausgangskörpers minimal ist, was aus der Sicht der Reibung und des Abriebs des Lagerkäfigs von Vorteil ist.

Die Anordnung der Wälzlaufbahnen an den Stirnseiten des Rads mit Innenverzahnung weist einige bedeutende Vorteile auf:
1. Das Schleifen der an den Stirnseiten des Rads mit Innenverzahnung angeordneten Laufbahnen kann auf hochproduktiven, bei der Lagerherstellung verwendeten Schleifmaschinen vorgenommen werden, was die Herstellungskosten stark verringert.
2. Die an den Stirnseiten des Rads mit Innenverzahnung angeordneten Laufbahnen dienen gleichfalls als Spannflächen für das Schleifen der Innenverzahnung, somit entfällt die Notwendigkeit einer zusätzlichen technischen Spannfläche, was ebenfalls die Herstellungskosten verringert.
3. Vereinfacht wird auch die Messung des Abstands der an den Stirnseiten des Rads mit Innenverzahnung angebrachten Laufbahnen zwecks Einstellung einer günstigen Axialvorspannung der Wälzlagerung der Ausgangskörper.

Zwischen der Radialfläche des Ausgangskörpers und der Radialfläche des Rads mit Innenverzahnung können ebenso Wälzelemente zylindrischer Form, deren Achsen zu der Achse des Rades mit Innenverzahnung parallel verlaufen, angeordnet werden. Vorzugsweise ist auch hier eine Führung der Wälzelemente durch einen Lagerkäfig vorgesehen.

Die Radialfläche des Ausgangskörpers und die Radialflächen des Rads mit Innenverzahnung können zwecks Beseitigung der Kantenspannung an den Enden der Wälzelemente, die sich zwischen diesen Flächen befinden, entsprechend gewölbt sein.

Auch hier ist die Verwendung von Kugeln denkbar.

Eine besonders vorteilhafte Ausgestaltung der Erfindung sieht vor, dass mindestens an den einander zugewandten Axialflächen des Ausgangskörpers und des Rads mit Innenverzahnung Lagerlaufbahnen für ein Wälzlager oder ein Kugellager vorgesehen sind.

Eine besonders vorteilhafte Ausgestaltung der Erfindung sieht ein Getriebe vor mit mindestens einem Rad mit Innenverzahnung, mit mindestens einem in Bezug auf das Rad drehbar gelagerten Ausgangskörper sowie mit einer Eingangswelle und einem mit der Innenverzahnung kämmenden Rad mit Außenverzahnung, wobei bei zwei Ausgangskörpern mindestens ein Rad zwischen den Ausgangskörpern angeordnet ist, sowie,einer zwischen dem Rad und dem Ausgangskörper angeordneten Einrichtung, welche die Planetenbewegung des Rades in eine Rotationsbewegung des Ausgangskörpers transformiert, wobei die Einrichtung mindestens einen zylindrischen, sich in Achsrichtung des Rades erstreckenden Körper aufweist, der in einem Organ drehbar gelagert ist. Dabei ist vorgesehen, dass die Eingangswelle mindestens einen Abschnitt mit einer Außenverzahnung aufweist, welche ein mit dem Organ verbundenes Zahnrad kämmt, wobei die Achse des Zahnrads der Achse der Öffnung, in welcher das Organ angeordnet ist, entspricht. Durch das die Außenverzahnung der Eingangswelle kämmende, mit dem Organ verbundene Zahnrad wird das Organ synchron zur Umdrehung der Eingangswelle gedreht, so dass eine Drehung der Eingangswelle eine Drehung des Organs um dessen Achse in der Öffnung bewirkt, wodurch das Rad mit Außenverzahnung eine kombinierte Dreh- und Exzenterbewegung ausführt. Dadurch wird der exzentrische Versatz zwischen dem zylinderförmigen Außenmantel und dem zylinderförmigen Innenmantel des hülsenförmigen Organs synchron zu der exzentrischen Bewegung des exzentrischen Abschnitts der Eingangswelle gedreht. Hierdurch entsteht ein zusätzlicher Freiheitsgrad zur Beeinflussung des Übersetzungsverhältnisses des Getriebes.

Eine solche Ausgestaltung des erfindungsgemäßen Getriebes weist sämtliche Vorteile eines Getriebes mit zentraler Kurbelwelle auf. Außerdem kann das gesamte Übersetzungsverhältnis mit Hilfe des Übersetzungsverhältnisses der gegenseitig im Eingriff stehenden Zahnräder und der Räder mit Außenverzahnung geändert werden.

Das Rad mit Außenverzahnung weist im Unterschied zu den vorherigen bevorzugten Ausgestaltungen anstelle einer drehbaren Lagerung auf der Eingangswelle eine zentrale Öffnung auf, deren Durchmesser mindestens dem Durchmesser der Eingangswelle zuzüglich der doppelten Exzentrizität entspricht.

Die folgende Beschreibung der Zeichnungen erläutert eine der möglichen Ausführungen des erfindungsgemäßen Getriebes. Es zeigen:
- Fig. 1: einen durch einen zylinderförmigen Körper und ein an einem der Ausgangskörper angeordnetes Querelement geführten Schnitt B-B durch ein erfindungsgemäßes Getriebe,
- Fig. 2: eine perspektivische Explosionsdarstellung der einzelnen Getriebekomponenten in deren gegenseitigen Funktionslagen,
- Fig. 3: einen in der Ebene der Stirnfläche eines Rades mit Außenverzahnung liegenden Schnitt C-C durch das Getriebe,
- Fig. 4: einen durch die Kreisring-Stirnfläche des Ausgangskörpers geführten Schnitt D-D durch das Getriebe,
- Fig. 5: eine detaillierte Ansicht der Anordnung der Transformationseinrichtung des Getriebes, die die Planetenbewegung des Rads mit Außenverzahnung in eine Rotationsbewegung des Ausgangselements umsetzt,
- Fig. 6: einen die Lage der Kurbelzapfenachsen im Verhältnis zur Eingangswellenachse zeigenden Schnitt der Eingangswelle durch ihre Symmetrieebene,
- Fig. 7: die Anordnung der Wälzelemente im Lagerkäfig zur Lagerung der Ausgangsglieder,
- Fig. 8: eine Teilansicht der axialen Führung des Rades mit Außenverzahnung,
- Fig. 9: ein Beispiel der Verbindung des Antriebsmotors mit dem Getriebe,
- Fig. 10: ein Querelement als ein mit dem Eingangskörper nicht integriertes Element,

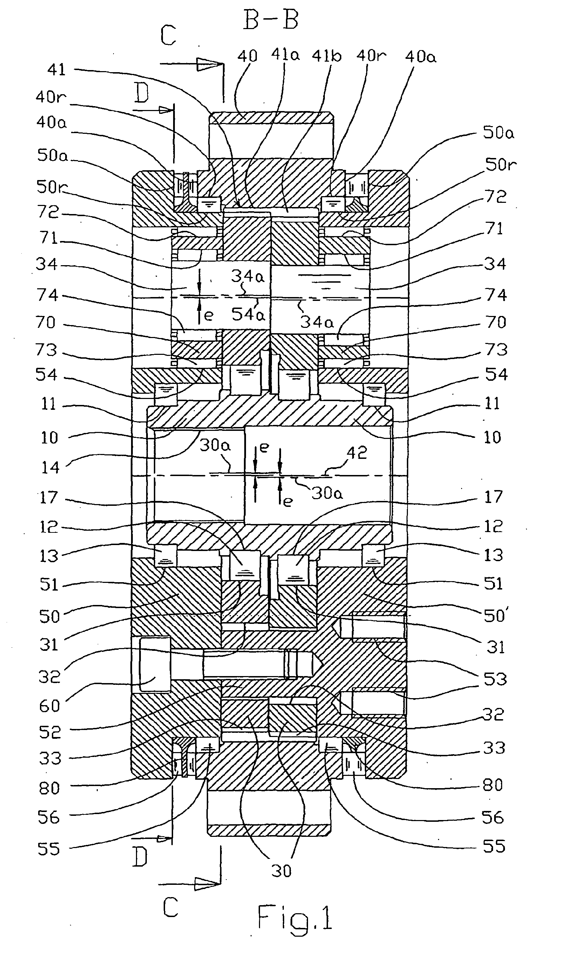

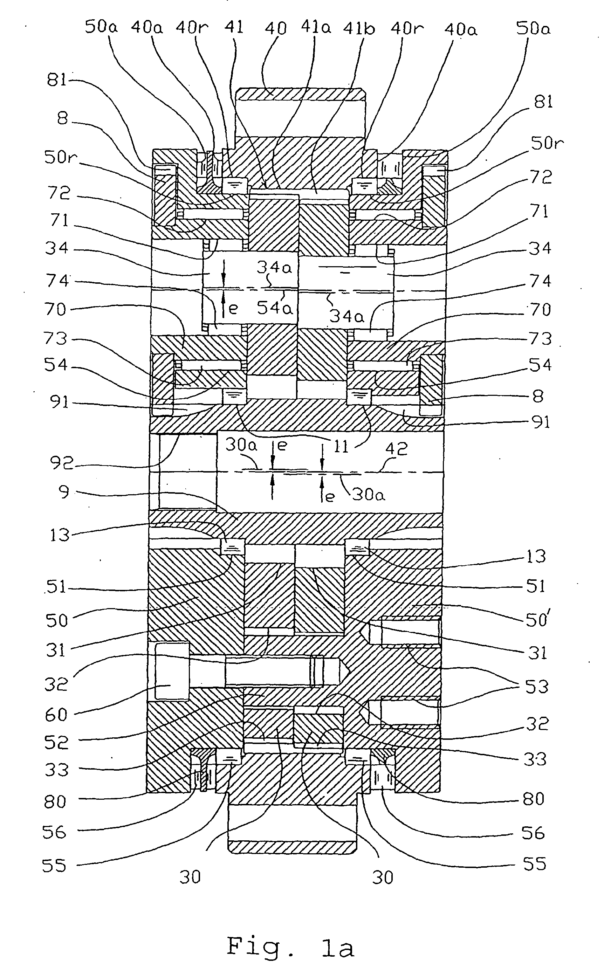

- Fig. 1a: einen Schnitt durch ein um eine zweite Stufe erweitertes erfindungsgemäßes Getriebe,

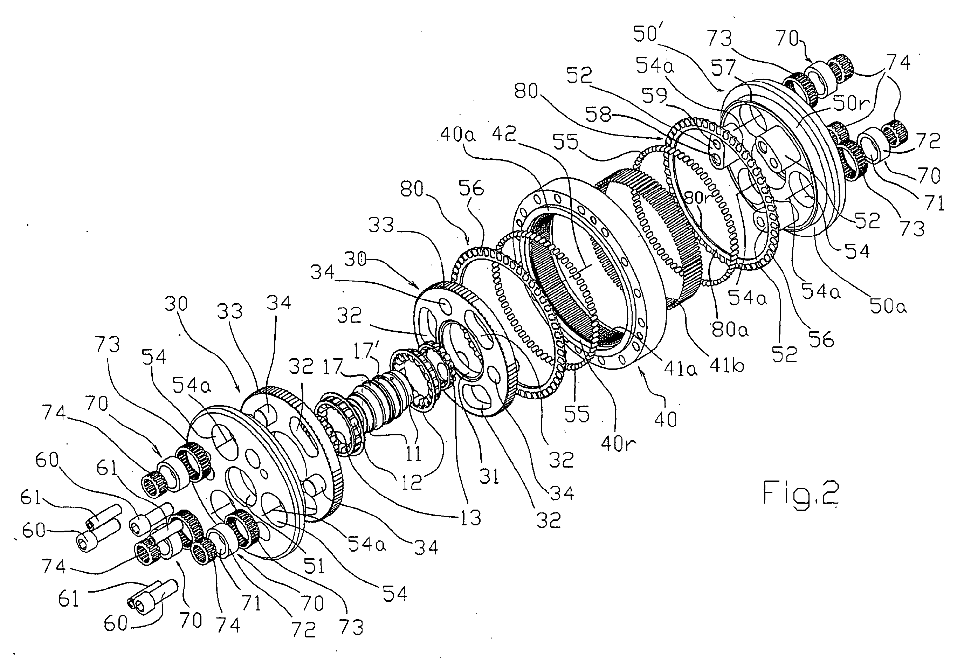

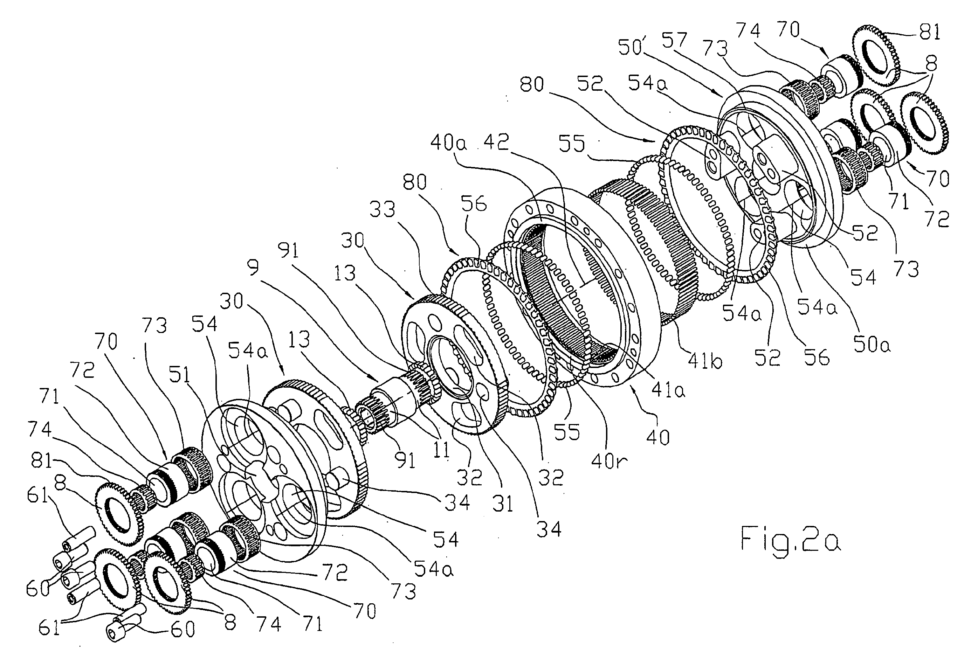

- Fig. 2a: eine perspektivische Explosionsdarstellung des um eine zweite Stufe erweiterten Getriebes, und

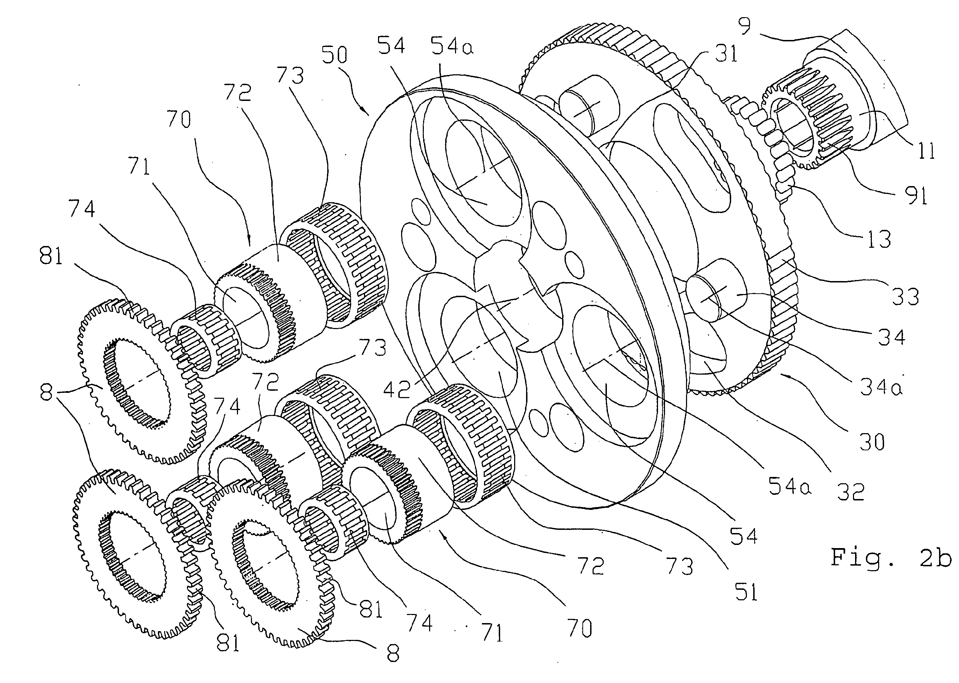

- Fig. 2b.: eine perspektivische Detailansicht der Transformationseinrichtung des um eine zweite Stufe erweiterten Getriebes.

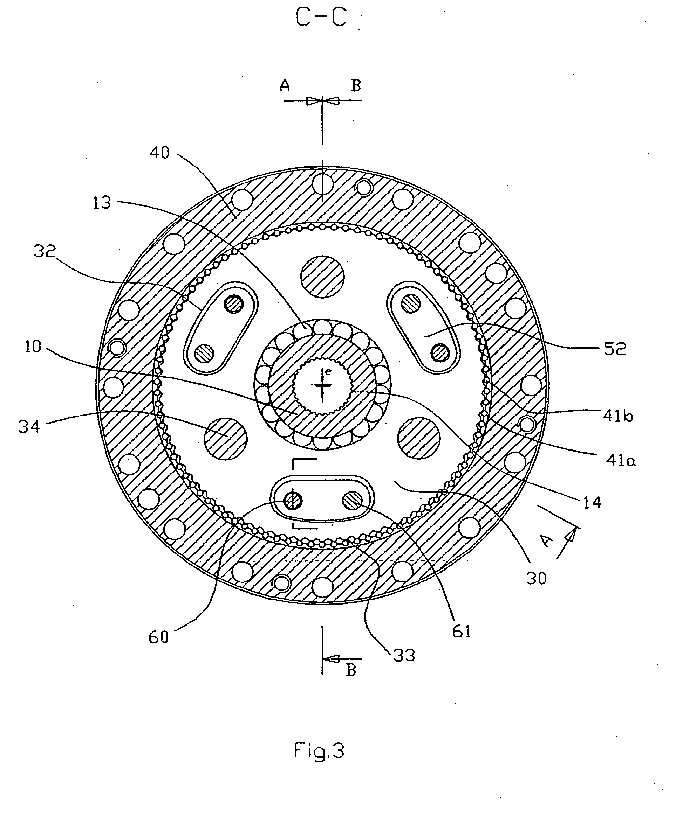

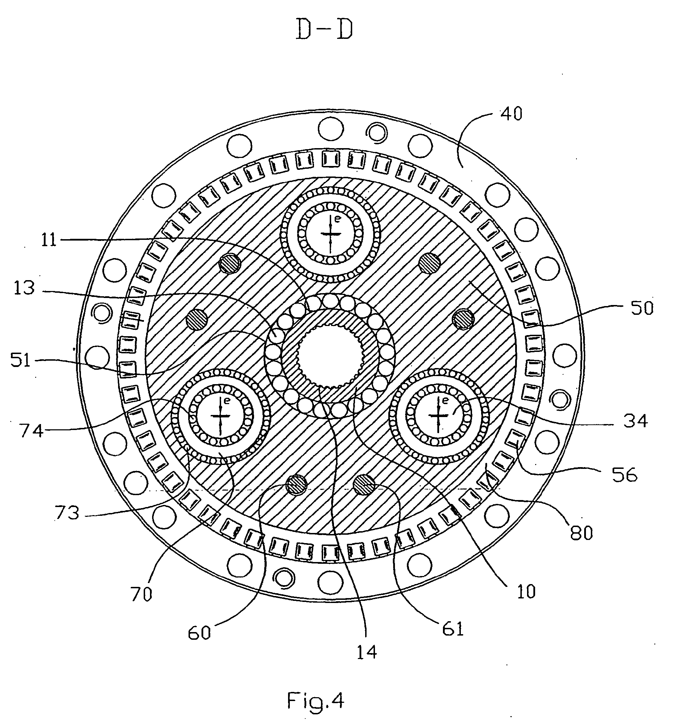

Eine erste vorteilhafte Ausgestaltung des erfindungsgemäßen Getriebes ist in den Figuren 1 und 2 und in den ergänzenden Figuren 3 bis 10 veranschaulicht.

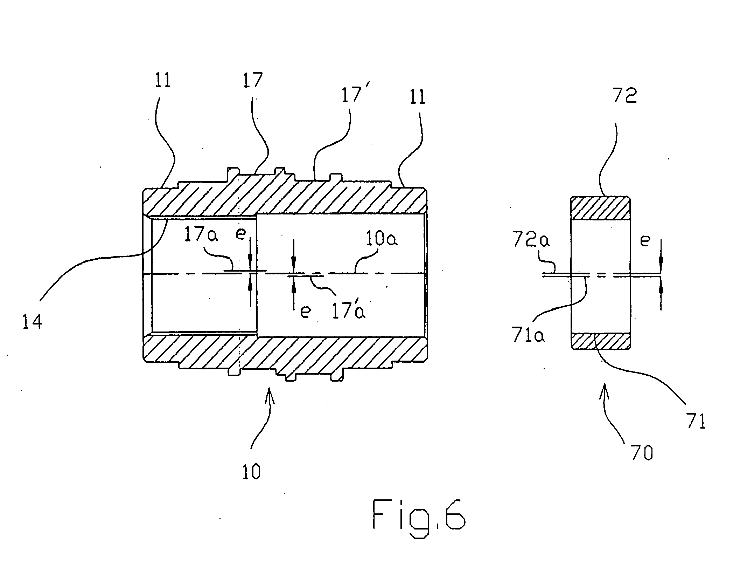

Die Eingangswelle 10 ist mit exzentrischen Abschnitten 17, 17' - den Exzentern - versehen, die um die Achse 10a der Eingangswelle um 180° gegeneinander versetzt sind. Die Achsen 17a, 17'a der exzentrischen Abschnitte 17, 17' sind entgegen der Achse 10a der Eingangswelle um einen Abstand e - der Exzentrizität - versetzt. Die Eingangswelle 10 ist an der Innenöffnung mit einer Innennutung 14 für den Anschluss eines Antriebsmotors versehen (Fig. 1 und 6).

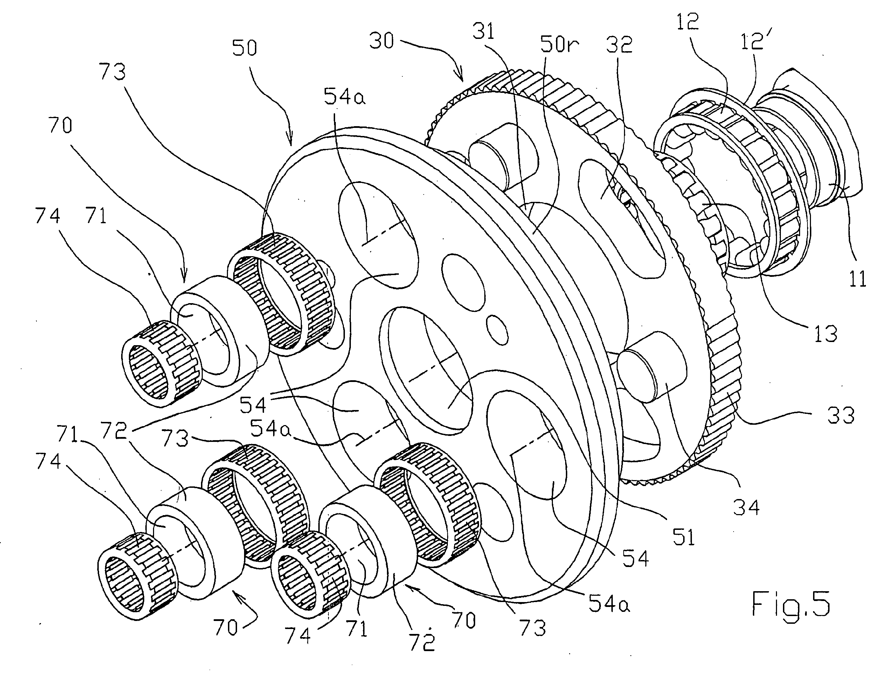

Auf den exzentrischen Abschnitten 17, 17', deren Umfang Laufbahnen für die Wälzelemente 12 bildet, sind durch die zentralen Öffnungen 31 Räder 30 mit Außenverzahnung 33 drehbar gelagert. Die Wälzkörper sind in dem Lagerkäfig 12' gelagert. Die Räder 30 mit Außenverzahnung 33 greifen in die Innenverzahnung 41 des Rads 40 ein (Fig. 1 und 5).

Die Zahnanzahl der Außenverzahnung 33 des Rads 30 ist geringer als die der Innenverzahnung 41 des Rads 40. Die Achse 30a der Räder 30 ist entgegen der Achse 42 des Rads 40 um den Abstand e versetzt (Fig. 1). Die Innenverzahnung 41 besteht aus Nuten 41a mit einem Halbkreisprofil, in denen Zylinderzapfen 41b gelagert sind (Fig. 2 und 3).

Die Räder 30 mit Außenverzahnung sind am Außenumfang im gleichen Abstand voneinander mit außermittigen, durchgehenden-Axialöffnungen 32 versehen (Fig. 1, 2, 3). Die Räder 30 sind zwischen den Ausgangskörpern 50, 50' angebracht, wobei die Ausgangskörper 50, 50' mittels Querelementen 52, die die Axialöffnungen 32 der Räder 30 mit einem Spiel so durchqueren, dass die Ausgangskörper 50, 50' ein gegenseitig bewegungsloses Paar bilden, verbunden sind (Fig. 1, 2).

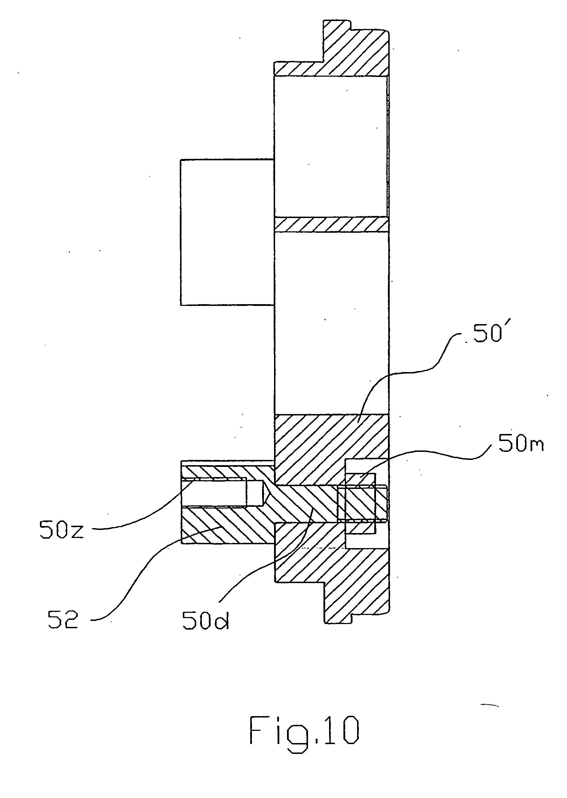

Die Querelemente 52 stellen einen integralen Bestandteil des Ausgangsglieds 50' dar (Fig. 1, 2). An deren Stirnseite ist eine Gewindebohrung 58 für die Schraube 60 sowie eine Bohrung 59 für den Stift 61 ausgeführt, die die Ausgangskörper 50, 50' fest verbinden (Fig. 1, 2 und 3). Das Querelement 52 kann als selbständige, mindestens mit einem Ausgangskörper 50, 50' fest verbundene Komponente gebildet sein (Fig. 10). An der Stirnseite des Querelements 52 befindet sich eine Gewindebohrung 50z für die Schraube 60 und eine Bohrung für den Stift 61, mit deren Hilfe die Ausgangskörper miteinander fest verbunden sind (Fig. 2). Das Querelement besitzt in diesem Fall einen zylinderförmigen Teil 50d mit an seinem einen Ende angeordneten Gewinde, der mit einer Sicherheitsmutter 50m versehen ist (Fig. 10).

Das fest verbundene Ausgangskörperpaar 50, 50' ist im Rad 40 drehbar gelagert. Jeder der Ausgangskörper 50, 50' ist mit einer zentralen Öffnung 51 mit einer äußeren zylindrische, radiale Außenfläche 50r versehen. In den zentralen Öffnungen 51 der Ausgangskörper 50, 50' ist mit Hilfe von Wälzelementen 13 und Lagerbahnen 11 an den Enden der Eingangswelle 10 die Eingangswelle 10 drehbar gelagert. Die Wälzelemente 13 sind in einem Lagerkäfig gelagert (Fig. 1, 2).

Im Raum zwischen der zentralen Öffnung 51 und der radialen Außenfläche 50r der Ausgangskörper 50, 50' befinden sich in gleichen Abständen voneinander am Außenumfang angebrachte außermittige Öffnungen 54 der Ausgangskörper 50, 50' (Fig. 1, 2).

Die Ausgangskörper 50, 50' sind an der Außenseite mit außermittigen Axialflächen 50a versehen, und zwar an der an das Rad 40 anliegenden Seite.

Das Rad 40 ist an den an die Ausgangskörper 50, 50' anliegenden Seiten mit zylindrischen radialen Innenflächen 40r und gleichzeitig an den Außen-Stirnseiten mit kreirsringförmigen Axialflächen 40a versehen, zu denen die Achse des Rads 40 mit Innenverzahnung 41 quer ausgerichtet ist. Der Querabstand der Axialflächen 40a am Rad 40 mit Innenverzahnung 41 bestimmt dessen Tiefe (Fig. 1, 2).

An beiden Seiten zwischen den Axialflächen 40a und 50a des Rads 40 und des Ausgangskörpers 50, 50' befinden sich Wälzelemente 56 zylindrischer Form, deren Achse quer zur Achse 42 des Rads 40 ausgerichtet ist. Die Wälzelemente 56 sind in den Aussparungen 81' des Lagerkäfigs 80 gelagert, der zwei Stirnflächen 80a und eine Innenfläche 80r aufweist, mit der er auf der zylindrischen Außenfläche des Ausgangskörpers lagert.

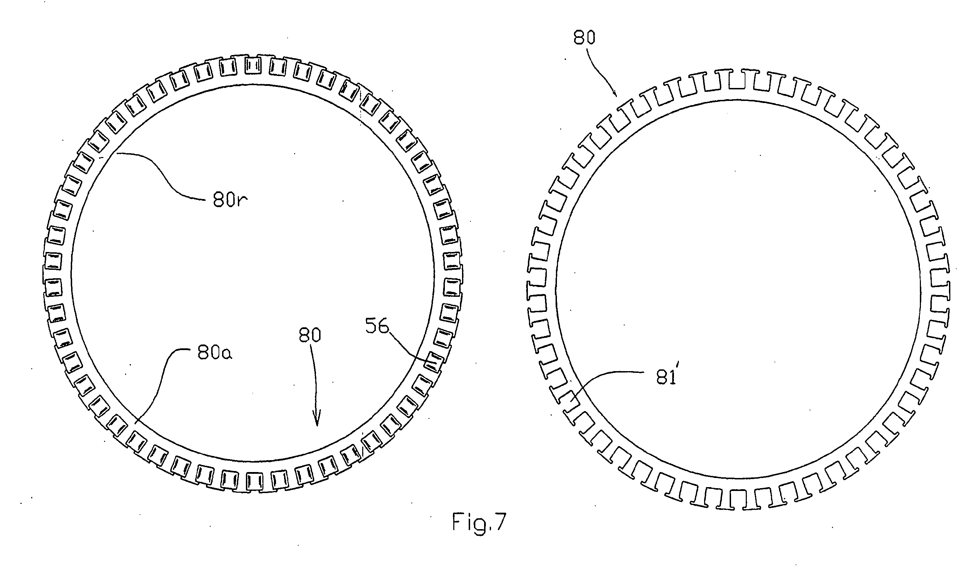

Zwischen den radialen Außenflächen 50r der Ausgangskörper 50, 50' mit radialen Innenflächen 40r des Rads 40 befinden sich zylinderförmige Wälzelemente 55, deren Achse in Richtung der Achse 42 des Rads mit Innenverzahnung orientiert ist (Fig. 1, 2). Die Wälzelemente 55 werden beim Wälzen über die Außenflächen 50r und 40r von einer der Stirnflächen 80a des Lagerkäfigs 80 und der am Rad 40 gebildeten Führungsfläche geführt (Fig. 1, 7).

Zwischen jedem der Räder 30 mit Außenverzahnung 33 und dem anliegenden Ausgangskörper 50, 50' ist eine Einrichtung angeordnet, die die Planetenbewegung des Rads 30 mit Außenverzahnung 33 in eine Rotationsbewegung des Ausgangskörpers 50, 50' umsetzt. Diese Einrichtung besteht aus drei zylinderförmigen Körpern 34, der Form nach zylindrischen Zapfen, die auf der Stirnfläche des an den Ausgangskörper 50, 50' anliegenden Rads 30 gleichmäßig über dessen Umfang verteilt angeordnet sind. Die zylinderförmigen Körper 34 sind in Richtung der Achse 42 des Rads 40 mit Innenverzahnung orientiert und mit dem Rad 30 mit Außenverzahnung fest verbunden. Die zylinderförmigen Körper 34 sind in den Organen 70 drehbar gelagert, die ihrerseits in den außermittigen Öffnungen 54 der Ausgangskörper 50, 50' drehbar gelagert sind (Fig. 1, 2). Das Organ 70 ist in Form eines Rings mit einer zylindrischen Innen- 71 und einer zylindrischen Außenfläche 72 ausgeführt, wobei die Achse 71a der zylindrischen Innenfläche 71 entgegen der Achse 72a der zylindrischen Außenfläche 72 um einen Abstand e versetzt ist. Eine derartige Form wird auch als Exzenterring bezeichnet. Der Abstand der Achse 34a des zylinderförmigen Körpers 34 von der Achse 54a der außermittigen Öffnung 54 des Ausgangskörpers 50, 50' beträgt ebenfalls e (Fig. 1, 6).

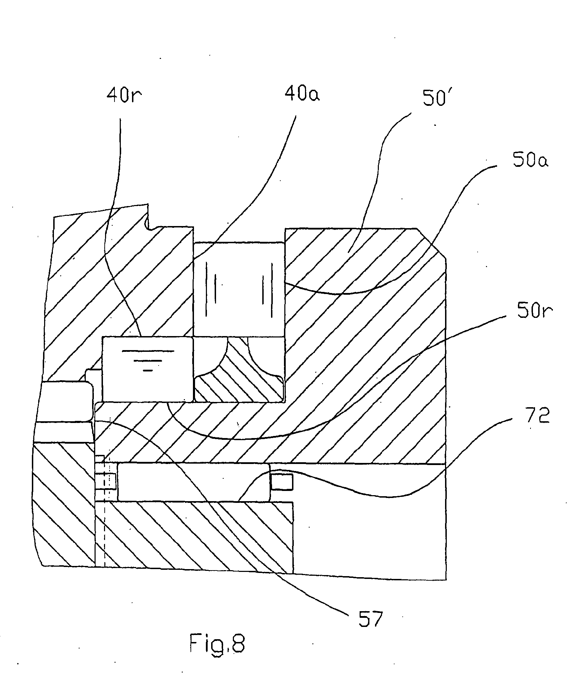

Die drehbare Lagerung des Organs 70 in der außermittigen Öffnung 54 des Ausgangskörpers 50, 50' ist als Wälzlagerung mit in einem Lagerkäfig gelagerten Wälzelementen 73 ausgeführt. Die Drehlagerung des zylindrischen Körpers 34 im Organ 70 ist ebenso als eine Wälzlagerung ausgeführt. Hierfür sind die in einem Lagerkäfig gelagerten Wälzelemente 74 vorgesehen (Fig. 1, 2). An den an die Räder 30 mit Außenverzahnung anliegenden Stirnseiten der Ausgangskörper 50, 50' sind Stützflächen 57 ausgebildet, zwischen denen die Räder bei deren Planetenbewegung axial geführt werden. Die Stützflächen 57 begrenzen gleichzeitig den Axialvorschub der Zylinderzapfen 41b der Innenverzahnung 41, (Fig. 8).

Mindestens an einem der Ausgangskörper 50, 50' sind an der Außen-Stirnfläche Gewindebohrungen 53 zur Befestigung des Getriebes am anzutreibenden Objekt oder am Rahmen der Einrichtung, in der das Getriebe installiert ist, ausgeführt.

Das zweite bevorzugte Ausführungsbeispiel des erfindungsgemäßen Getriebes ist in den Figuren 1a und 2a sowie auf Figur 2b gezeigt.

An beiden Seiten der Eingangswelle 9 sind Außenverzahnungen 91 und in der Innenöffnung eine Innennutung 92 für den Anschluß des Antriebsmotors angeordnet. Die Außenverzahnung 33 der Räder 30 greift in die Innenverzahnung 41 des Rads 40 ein. Die Zahnanzahl der Außenverzahnung 33 des Rads 30 ist geringer als die Zahnanzahl der Innenverzahnung 41 des Rads 40. Die Achse 30a der Räder 30 ist entgegen der Achse der 42 des Rads 40 um einen Abstand e versetzt. Die Innenverzahnung 41 besteht aus Nuten 41a mit Halbkreisprofil, in denen die Zylinderzapfen 41b gelagert sind.

Die Räder 30 mit Außenverzahnung 33 weisen gleichmäßig über ihren Umfang verteilte außermittige, durchgehende, in axialer Richtung verlaufende Axialöffnungen 32 auf. Die Räder 30 sind zwischen den Ausgangskörpern 50, 50' angeordnet. Die Ausgangskörper 50, 50 sind mittels Querelementen 52, welche mit Spiel durch die außermittigen Axialöffnungen 32 der Räder 30 hindurchführen miteinander verbunden, so dass die Ausgangskörper 50, 50' ein gegenseitig unbewegliches Paar bilden.

Die Querelemente 52 stellen einen integralen Bestandteil des Ausgangskörpers 50 dar. An der Stirnseite der Querelemente ist jeweils eine Öffnung und eine Bohrung für jeweils eine Schraube 60 und einen Stift 61 vorgesehen, die die Ausgangskörper 50, 50' fest miteinander verbinden.

Die zwei fest miteinander verbundenen Ausgangskörper 50, 50' sind in dem Rad 40 drehbar gelagert.

Jeder der Ausgangskörper 50, 50' weist eine zentrale Öffnung 51 und eine zylindrische radiale Außenfläche 50r auf. In den zentralen Öffnungen 51 der Ausgangskörper 50, 50' ist mittels Wälzelementen 13 und Lagerbahnen 11 an den Enden der Eingangswelle 10 die Eingangswelle 10 drehbar gelagert. Die Wälzelemente 13 sind in einem Lagerkäfig angeordnet.

Im Raum zwischen der zentralen Öffnung 51 und der radialen Außenfläche 50r der Ausgangskörper 50, 50' befinden sich in gleichen Abständen zueinander angeordnete Öffnungen 54 der Ausgangskörper 50, 50'.

An der Außenseite der Ausgangskörper 50, 50' sind an der dem Rad 40 zugewandten Seite außermittige Axialflächen 50a ausgebildet.

Das Rad 40 weist an seinen den Ausgangskörpern 50,50' zugewandten Seiten zylindrische radiale Innenflächen 40r auf. Darüber hinaus sind an den Außen-Stirnseiten kreisringförmige Axialflächen 40a ausgebildet, welche normal zu der Achse 42 des Rads 40 mit Innenverzahnung 41 ausgerichtet sind. Der Querabstand der Axialflächen 40a in Richtung der Achse 42 bestimmt maßgeblich die Dicke des Rads 40 mit Innenverzahnung 41.

An beiden Seiten zwischen den Axialflächen 40a und 50a des Rads 40 und dem Ausgangskörper 50, 50' befinden sich zylinderförmige Wälzelemente 56, deren Achse quer zur Achse 42 des Rads 40 ausgerichtet ist. Die Wälzelemente 56 sind in Aussparungen 81' des Lagerkäfigs 80 gelagert. Der Lagerkäfig 80 weist zwei Stirnflächen 80a und eine Innenfläche 80r auf, mit der er auf der zylindrischen Außenfläche des Ausgangskörpers drehbar gelagert ist.

Zwischen den radialen Außenflächen 50r der Ausgangskörper 50, 50' und den radialen Innenflächen 40r des Rads 40 befinden sich zylinderförmige Wälzelemente 55, deren Achsen parallel zur Richtung der Achse 42 des Rads 40 mit Innenverzahnung 41 verlaufen.

Die Wälzelemente 55 werden beim Wälzen auf den Flächen 50r und 40r von einer der Stirnflächen 80a des Lagerkäfigs 80 und der im Rad 40 gebildeten Führungsfläche geleitet.

Zwischen jedem der Räder 30 mit Außenverzahnung und dem anliegenden Ausgangskörper 50, 50' befindet sich eine Einrichtung, die die Planetenbewegung des Rads 30 mit Außenverzahnung in eine Rotationsbewegung des Ausgangskörpers 50, 50' umsetzt. Die Einrichtung besteht aus drei zylinderförmigen Körpern 34, der Form nach Zylinderzapfen, die am Außenumfang der an den Ausgangskörper 50, 50' anliegenden Stirnfläche des Rads 30 gleichmäßig verteilt sind. Die zylinderförmigen Körper 34 sind in Richtung der Achse 42 des Rads 40 mit Innenverzahnung orientiert und mit dem Rad 30 mit Außenverzahnung fest verbunden. Die zylinderförmigen Körper 34 sind in den Organen 70 drehbar gelagert, die ihrerseits in den außermittigen Öffnungen 54 der Ausgangskörper 50, 50' drehbar lagern.

Das Organ 70 hat die Form eines Rings mit einer zylindrischen Innen- 71 und Außenfläche 72, wobei die Achse 71a der zylindrischen Innenfläche entgegen der Achse 72a der zylindrischen Außenfläche 72 um den Abstand e versetzt ist - Exzenterring. Der Abstand der Achse 34a des zylinderförmigen Körpers 34 von der Achse 54a der außermittigen Öffnung 54 des Ausgangskörpers 50, 50' entspricht ebenfalls der Excentrizitäte.

Die drehbare Lagerung des Organs 70 in der außermittigen Öffnung 54 des Ausgangskörpers 50, 50' ist wiederum als Wälzlagerung mit in einem Lagerkäfig gelagerten Wälzelementen 73 ausgeführt. Die Drehlagerung des zylindrischen Körpers 34 im Organ 70 ist ebenso als eine Wälzlagerung ausgeführt. Hierfür sind die in einem Lagerkäfig gelagerten Wälzelemente 74 vorgesehen (Fig. 1a, 2a, 2b). An den an die Räder 30 mit Außenverzahnung anliegenden Stirnseiten der Ausgangskörper 50, 50' sind Stützflächen 57 ausgebildet, zwischen denen die Räder bei deren Planetenbewegung axial geführt werden. Die Stützflächen 57 begrenzen gleichzeitig den Axialvorschub der Zylinderzapfen 41b der Innenverzahnung 41, (Fig. 2a).

Mit dem Organ 70 ist das Rad 8 mit der zweiten Außenverzahnung 81 unverdrehbar verbunden, das mit der ersten Außenverzahnung 91 der Eingangswelle 9 so im Eingriff steht, dass die Achse des Rads mit der zweiten Außenverzahnung mit der Achse der Außenfläche 72 des Organs 70 identisch ist (Fig. 2b). Das Rad 8 mit der zweiten Außenverzahnung 81 ist mit dem Organ 70 mittels einer Nutverbindung verbunden. Durch eine Drehbewegung der Eingangswelle 9 werden über die miteinander in Eingriff stehenden Verzahnungen 81 und 91 die in den Ausgangskörpern 50, 50' drehbar gelagerten Organe 70 in eine Drehbewegung versetzt. Die Organe 70 weisen Außen- 72 und Innenflächen 71 auf, deren Achsen 72a, 71a um die Exzentrizität e zueinander versetzt sind. Werden die Organe 70 durch die miteinander in Eingriff stehenden Verzahnungen 81 und 91 in Drehung versetzt, so führt das Rad 30 mit Außenverzahnung 33 eine Exzenterbewegung aus. Damit das Rad 30 diese Exzenterbewegung ausführen kann, ist eine zentrale Öffnung 31 im Rad 30 angeordnet, deren Durchmesser dem Durchmesser der Eingangswelle 9 zuzüglich der doppelten Exzentrizität e entspricht. Durch diese Exzenterbewegung kämmt die Außenverzahnung 33 des Rads 30 mit der Innenverzahnung 41, wodurch es zu einer kombinierten Dreh- und Exzenterbewegung des Rads 30 kommt. Die von der Eingangswelle 9 mittels der Verzahnungen 81 und 91 angetriebenen Organe 70 bilden wiederum zusammen mit den an dem Rad 30 angeordneten zylindrischen Körpern 34, sowie den in den Ausgangskörpern 50, 50' angeordneten Öffnungen 54 die Transformationseinrichtung, welche diese kombinierte Dreh- und Exzenterbewegung in eine Drehbewegung des Ausgangskörpers transformiert.

Die Ausgangskörper 50, 50' sind an den an die Räder 30 mit Außenverzahnung anliegenden Stirnseiten mit ebenen Stützflächen 57 versehen, zwischen denen die Räder bei ihrer Planetenbewegung axial geführt werden. Die Stützflächen 57 sichern die Zylinderzapfen 41b der Innenverzahnung 41 gegen Axialverschiebung (Fig. 2a).

Einer der Ausgangskörper 50, 50' ist an seiner Außen-Stirnfläche mit Gewindebohrungen 53 versehen, zur Befestigung des Getriebes am getriebenen Objekt oder am Rahmen der Einrichtung, in der das Getriebe installiert ist (Fig. 1a).

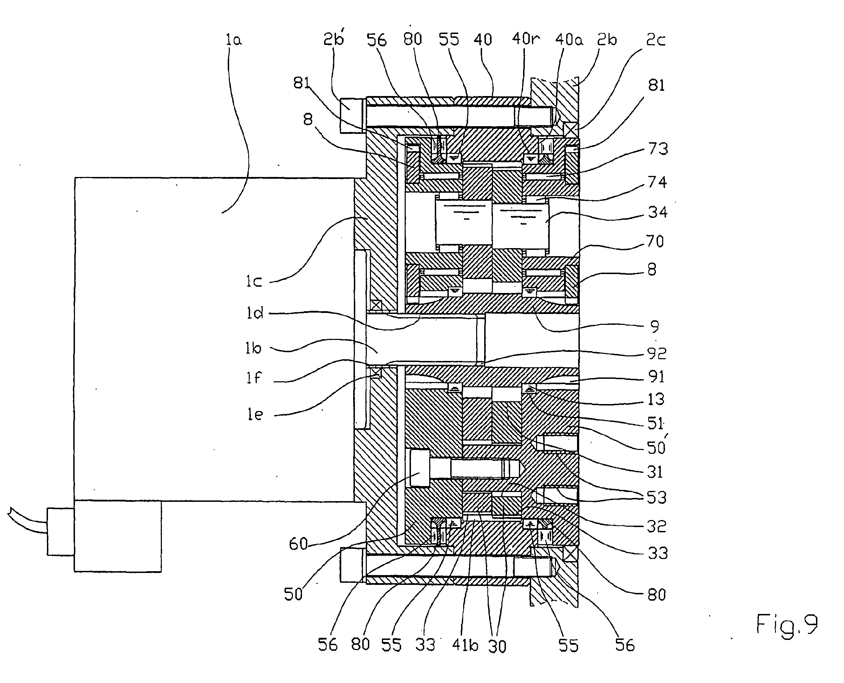

Die Verbindung des Antriebsmotors 1a mit dem am Rahmen 2b befestigten Getriebe und dessen Abdichtung 2c ist in Fig. 9 gezeigt. Der Antriebsmotor 1a ist am Ende der Motorwelle 1b mit Außennutung 1d versehen, die in die Innennutung 92 der Eingangswelle 9 des Getriebes eingefügt ist. Der Antriebsmotor 1a ist mit dem Getriebe mittels des Flanschs 1c verbunden, der mit Hilfe von Schrauben 2b' an das Getriebe geschraubt ist. Der Motor ist mittels einer Wellendichtung 1e und eines Dichtrings 1f abgedichtet. Die Abdichtung 2c des Getriebes ist im Rahmen 2b gebettet, der Außenumfang des Ausgangskörpers 50' bildet die Dichtfläche für die Dichtung.

Es wird hervorgehoben, dass der den Schmierraum der Einrichtung bildende außermittige Raum des Eingangskörpers genügend groß und von dem Schmierraum der übrigen Komponenten relativ gut getrennt ist. Dadurch wird eine Verunreinigung des drehbar gelagerten Exzenterrings durch mikroskopische Abriebprodukte, die beim Kontakt der übrigen Funktionsflächen des Getriebemechanismus entstehen, verhindert.

Das Rad mit Außenverzahnung kann mit mindestens einer außermittig angeordneten axialen Durchgangsöffnung versehen sein.

Der oder die Ausgangskörper weisen vorzugsweise eine zentrale Öffnung und eine zylindrische radiale Außenfläche auf. In der zentralen Öffnung der Ausgangskörper kann dabei die Eingangswelle drehbar gelagert sein.

Vorzugsweise befindet sich im Bereich zwischen der zentralen Öffnung und der äußeren Wälzfläche des Ausgangskörpers mindestens eine zusätzliche außermittige Öffnung.

Vorzugsweise ist mindestens einer der Ausgangskörper an seiner Außenseite mit einer axial ausgerichteten Kreisringfläche versehen.

Es ist darüber hinaus denkbar, die Ausgangskörper an den an die Räder mit Außenverzahnung anliegenden Stirnseiten mit Stütz-Stirnflächen zu versehen, zwischen denen das oder die Räder bei deren Planetenbewegung axial geführt werden. Sofern die Innenverzahnung durch im Querschnitt kreisförmige, in halbkreisförmige Nuten eingelegte Zapfen gebildet ist, begrenzt die Führung gleichzeitig die Axialbewegung der Zapfen.

An mindestens einem der Ausgangskörper sind dabei vorzugsweise an der Außen-Stirnfläche Gewindebohrungen für die Befestigung des Getriebes am angetriebenen Objekt oder am Rahmen einer Einrichtung, in der das Getriebe installiert ist, angeordnet.

Sofern zwei Ausgangskörper vorgesehen sind, ist mindestens ein Rad mit Außenverzahnung zwischen den Ausgangskörpern angebracht. Dabei können die Ausgangskörper miteinander verbunden sein. Die miteinander fest verbundenen Ausgangskörper können dabei in dem Rad mit Innenverzahnung drehbar gelagert sein. Die Verbindung der Ausgangskörper kann mit Hilfe mindestens eines Querelements vorgenommen werden, das mit einem Spiel die Axialöffnung des Rads mit Außenverzahnung so durchquert, dass die Ausgangskörper ein gegenseitig unbewegliches Paar bilden. Das Querelement bildet entweder einen integralen Bestandteil mindestens eines Ausgangselements oder ist als eine selbständige Komponente gebildet, die mindestens mit einem Ausgangskörper fest verbunden ist. An der Stirnseite des Querelements kann eine Gewindebohrung für eine Schraube und eine Bohrung für einen Stift gebildet sein, mit deren Hilfe die Ausgangskörper miteinander fest verbunden sind.

### Bezugszeichenliste

- e: Abstand der Eingangswellenachse von der Achse des exzentrischen Abschnitts der Eingangswelle - Exzentrizität

- 1a: Antriebsmotor
- 1b: Motorwelle
- 1c: Flansch
- 1d: Außennutung
- 1e: Wellendichtung
- 1f: Dichtring
- 2b: Rahmen
- 2b': Schraube
- 2c: Abdichtung
- 8: Rad mit Außenverzahnung
- 9: Eingangswelle mit Verzahnung
- 10: Eingangswelle
- 10a: Achse der Eingangswelle
- 11: Lagerbahnen der Eingangswelle
- 12: Wälzelemente
- 12': Lagerkäfig
- 13: Wälzelemente
- 14: Innennutung
- 17, 17': Exzentrischer Abschnitt der Eingangswelle
- 17a, 17'a: Achse der exzentrischen Abschnitte der Eingangswelle
- 30: Rad mit Außenverzahnung
- 30a: Achse
- 31: Zentrale Öffnung
- 32: außermittige, durchgehende Axialöffnung
- 33: Außenverzahnung .
- 34: zylinderförmiger Körper
- 34a: Achse des zylinderförmigen Körpers
- 40: Rad mit Innenverzahnung
- 40a: Axialfläche des Rads mit Innenverzahnung
- 40r: radiale Innenfläche des Rads mit Innenverzahnung
- 41: Innenverzahnung
- 41a: Nuten
- 41b: Zylinderzapfen
- 50, 50': Ausgangskörper
- 50a: Axialfläche des Ausgangskörpers
- 50d: zylinderförmiger Teil des Querelements zur Verbindung der Ausgangskörper
- 50m: Schraubenmutter zur Befestigung des Querelements im Ausgangskörper
- 50r: radiale Außenfläche des Ausgangskörpers
- 50z: Gewindebohrung an der Stirnseite des Querelements
- 51: zentrale Öffnung des Ausgangskörpers
- 52: Querelement zur Verbindung der Ausgangskörper
- 53: Gewindebohrung
- 54: außermittige Öffnung des Ausgangskörpers
- 54a: Achse der außermittigen Öffnung des Ausgangskörpers
- 55: Wälzelemente zwischen der radialen Außenfläche des Ausgangskörpers und der radialen Innenfläche des Rads mit Innenverzahnung
- 56: Wälzelemente zwischen der Axialfläche des Ausgangskörpers und der Axialfläche des Rads mit Innenverzahnung
- 57: Stützflächen an den Ausgangskörpern für die axiale Radführung
- 58: Gewindebohrung an der Stirnseite des Querelements
- 59: Bohrung
- 60: Schraube
- 61: Stift
- 70: Organ
- 71: Innenfläche des Organs
- 71a: Achse der Innenfläche des Organs
- 72: Außenfläche des Organs
- 72a: Achse der Außenfläche des Organs
- 73: Wälzelemente der drehbaren Wälzlagerung des Organs in der außermittigen Öffnung des Ausgangskörpers
- 74: Wälzelemente der drehbaren Wälzlagerung des zylinderförmigen Körpers im Organ
- 80: Lagerkäfig der drehbaren Wälzlagerung des Ausgangskörpers im Rad mit Innenverzahnung
- 80a: Stirnfläche des Lagerkäfigs der drehbaren Wälzlagerung des Ausgangskörpers im Rad mit Innenverzahnung
- 80r: Innenfläche des Lagerkäfigs
- 81: zweite Außenverzahnung
- 81': Aussparung des Lagerkäfigs der drehbaren Wälzlagerung des Ausgangskörpers im Rad mit Innenverzahnung
- 91: Verzahnung an der Eingangswelle
- 92: Innennutung

## Patentansprüche

1. Getriebe mit mindestens einem Rad (40) mit Innenverzahnung (41), mit mindestens einem in Bezug auf das Rad (40) drehbar gelagerten Ausgangskörper (50, 50') sowie einer Eingangswelle (10) mit mindestens einem exzentrischen Abschnitt (17, 17') mit einer Exzentrizität (e), auf dem ein mit der Innenverzahnung kämmendes Rad (30) mit Außenverzahnung (33) drehbar gelagert ist, wobei bei zwei Ausgangskörpern (50, 50') mindestens ein Rad (30) zwischen den Ausgangskörpern (50, 50') angeordnet ist, sowie einer zwischen dem Rad (30) und dem Ausgangskörper (50, 50') angeordneten Einrichtung, welche die Planetenbewegung des Rades (30) in eine Rotationsbewegung des Ausgangskörpers transformiert, wobei die Einrichtung mindestens einen zylindrischen, sich in Achsrichtung des Rades (30) erstreckenden Körper (34) aufweist, der in einem Organ (70) drehbar gelagert ist,
**dadurch gekennzeichnet,**
**dass** der Körper (34) mit dem Rad (30) betriebsgemäß verbunden ist,
**dass** das Organ (70) in einer Öffnung (54) des Ausgangskörpers (50, 50') drehbar gelagert ist, und
**dass** die Achse (34a) des Körpers (34) von der Achse (54a) der Öffnung (54) um einen der Exzentrizität (e) entsprechenden Abstand beabstandet ist.

2. Getriebe nach Anspruch 1,
**dadurch gekennzeichnet,**
**dass** die Teile der Einrichtung formschlüssig miteinander verbindbar sind.

3. Getriebe nach Anspruch 1 oder 2,
**dadurch gekennzeichnet,**
**dass** der zapfenförmige und mit Abstand zur Längs-Achse (42) der Eingangswelle (10) angeordnete Körper (34) in die Öffnung (54) hineinragt.

4. Getriebe nach einem der Ansprüche 1 bis 3,
**dadurch gekennzeichnet,**
**dass** das Organ (70) hohlzylinderförmig ausgebildet ist.

5. Getriebe nach Anspruch 4,
**dadurch gekennzeichnet,**
**dass** das Organ (70) die Form einer Hülse aufweist, die den Raum zwischen dem Körper (34) und der Öffnung (54) spielfrei ausfüllt.

6. Getriebe nach einem der Ansprüche 1 bis 5,
**dadurch gekennzeichnet,**
**dass** die Außen- und Innenumhüllung des Organs (70) zylindrisch ist,
**dass** die Achse (54a) der Öffnung (54) mit der Achse (72a) der Außenfläche (72) des Organs (70) zusammenfällt und
**dass** der Abstand der Achse (72a) der Außenfläche (72) des Organs (70) von der Achse (71a) der zylindrischen Innenumhüllung (71) der Exzentrizität (e) entspricht.

7. Getriebe nach einem der Ansprüche 1 bis 6,
**dadurch gekennzeichnet,**
**dass** mehrere, vorzugsweise zwei, drei, vier, fünf oder sechs Körper (34) vorgesehen sind, die um die Längs-Achse (42) der Eingangswelle (10) verteilt sind und mit einer entsprechenden Anzahl von Organen (70) in betrieblicher Verbindung stehen.

8. Getriebe nach einem der Ansprüche 1 bis 7,
**dadurch gekennzeichnet,**
**dass** die axiale Länge der Körper (34) sowie die axiale Länge der Organe (70) so gewählt ist, dass sie in etwa der Dicke des Ausgangskörpers (50) entsprechen.

9. Getriebe nach einem der Ansprüche 1 bis 8,
**dadurch gekennzeichnet,**
**dass** die Verbindung zwischen den Körpern (34) und den zugeordneten Organen (70) durch Steckverbindungen in axialer Richtung herstellbar ist.

10. Getriebe nach einem der vorhergehenden Ansprüche
**dadurch gekennzeichnet,**
**dass** mindestens zwischen den planparallelen Stirnseiten des Ausgangskörpers (50) und des Rads (40) mit Innenverzahnung (41) ein Axialwälzlager angeordnet ist.

11. Getriebe nach einem der vorhergehenden Ansprüche
**dadurch gekennzeichnet,**
**dass** das Organ (70) die Form einer excenterringförmigen Hülse aufweist und in dem Raum zwischen dem Körper (34) und der Öffnung (54) angeordnet ist, wobei zwischen dem Körper (34) und dem Organ (70) und/oder zwischen dem Organ (70) und der Öffnung (54) jeweils ein Wälzlager angeordnet ist.

12. Getriebe nach einem der vorhergehenden Ansprüche
**dadurch gekennzeichnet,**
**dass** der exzentrische Abschnitt (17, 17') der Eingangswelle (10) mindestens aus einem um die Exzentrizität (e) gegenüber der Längsachse (42) der Eingangswelle (10) parallel versetzten zylinderförmigen Kurbelzapfen besteht, dessen Durchmesser mindestens dem Durchmesser der Antriebswelle zuzüglich dem doppelten Wert der Exzentrizität (e) entspricht.

13. Getriebe nach einem der vorhergehenden Ansprüche
**dadurch gekennzeichnet,**
**dass** der Ausgangskörper (50) stirnseitig an dem Rad (40) mit Innenverzahnung (41) drehbar gelagert ist.

14. Getriebe nach Anspruch 13,
**dadurch gekennzeichnet,**
**dass** mindestens an den einander zugewandten Axialflächen des Ausgangskörpers (50) und des Rads (40) mit Innenverzahnung (41) Lagerlaufbahnen vorgesehen sind.

15. Getriebe mit mindestens einem Rad (40) mit Innenverzahnung (41), mit mindestens einem in Bezug auf das Rad (40) drehbar gelagerten Ausgangskörper (50, 50') sowie einer Eingangswelle (10) und einem mit der Innenverzahnung kämmenden Rad (30) mit Außenverzahnung (33), wobei bei zwei Ausgangskörpern (50, 50') mindestens ein Rad (30) zwischen den Ausgangskörpern (50, 50') angeordnet ist, sowie einer zwischen dem Rad (30) und dem Ausgangskörper (50, 50') angeordneten Einrichtung, welche die Planetenbewegung des Rades (30) in eine Rotationsbewegung des Ausgangskörpers transformiert, wobei die Einrichtung mindestens einen zylindrischen, sich in Achsrichtung des Rades (30) erstreckenden Körper (34) aufweist, der in einem Organ (70) drehbar gelagert ist,
**dadurch gekennzeichnet,**
**dass** der Körper (34) mit dem Rad (30) betriebsgemäß verbunden ist,
**dass** das Organ (70) in einer Öffnung (54) des Ausgangskörpers (50, 50') drehbar gelagert ist,
**dass** die Achse (34a) des Körpers (34) von der Achse (54a) der Öffnung (54) um einen der Exzentrizität (e) entsprechenden Abstand beabstandet ist,
**dass** die Eingangswelle (9) mindestens einen Abschnitt mit einer Außenverzahnung (91) aufweist, welche ein mit dem Organ (70) verbundenes Zahnrad (8) kämmt, wobei die Achse des Zahnrads (8) der Achse (54a) der Öffnung (54), in welcher das Organ (70) angeordnet ist, entspricht,
so dass eine Drehung der Eingangswelle eine Drehung des Organs (70) um dessen Achse (72a) in der Öffnung (54) bewirkt, wodurch das Rad (30) eine kombinierte Dreh- und Exzenterbewegung ausführt, und
**dass** das Rad (30) eine zentrale Öffnung (31) aufweist, deren Durchmesser mindestens dem Durchmesser der Eingangswelle (9) zuzüglich der doppelten Exzentrizität (e) entspricht.

16. Getriebe nach Anspruch 15,
**dadurch gekennzeichnet,**
**dass** die Außen- und Innenumhüllung des Organs (70) zylindrisch ist,
**dass** die Achse (54a) der Öffnung (54) mit der Achse (72a) der Außenfläche (72) des Organs (70) zusammenfällt und
**dass** der Abstand der Achse (72a) der Außenfläche (72) des Organs (70) von der Achse (71a) der zylindrischen Innenumhüllung (71) der Exzentrizität (e) entspricht.

17. Getriebe nach einem der vorhergehenden Ansprüche
**dadurch gekennzeichnet,**
**dass** der Ausgangskörper (50) stirnseitig an dem Rad (40) mit Innenverzahnung (41) drehbar gelagert ist.

## Claims

1. A gear mechanism having at least one wheel (40) with internal toothing (41), having at least one output body (50, 50'), supported rotatably relative to the wheel (40), and one input shaft (10) with at least one eccentric portion (17, 17') having an eccentricity (e), on which portion a wheel (30) with external toothing (33) and meshing with the internal toothing is rotatably supported, and when there are two output bodies (50, 50'), at least one wheel (30) is disposed between the output bodies (50, 50'), and having an arrangement, disposed between the wheel (30) and the output body (50, 50'), that transforms the planetary motion of the wheel (30) into a rotary motion of the output body, and the arrangement has at least one cylindrical body (34), which extends in the direction of the axial direction of the wheel (30) and is supported rotatably in a device (70),
**characterized in that**
the body (34) is operationally connected to the wheel (30);
that the device (70) is supported rotatably in an opening (54) in the output body (50, 50'); and
that the axis (34a) of the body (34) is spaced apart from the axis (54a) of the opening (54) by a spacing corresponding to the eccentricity (e).

2. The gear mechanism as defined by claim 1,
**characterized in that**
the parts of the arrangement are connectable to one another in form-locking fashion.

3. The gear mechanism as defined by claim 1 or 2,
**characterized in that**
the pinlike body (34) disposed in spaced-apart fashion from the longitudinal axis (42) of the input shaft (10) protrudes into the opening (54).

4. The gear mechanism as defined by one of claims 1 through 3,
**characterized in that**
the device (70) is embodied hollow-cylindrically.

5. The gear mechanism as defined by claim 4,
**characterized in that**
the device (70) has the shape of a sleeve, which fills up the space between the body (34) and the opening (54) without play.

6. The gear mechanism as defined by one of claims 1 through 5,
**characterized in that**
the outer and inner sheathing of the device (70) is cylindrical;
that the axis (54a) of the opening (54) coincides with the axis (72a) of the outer face (72) of the device (70); and
that the spacing of the axis (72a) of the outer face (72) of the device (70) from the axis (71a) of the cylindrical inner sheathing (71) corresponds to the eccentricity (e).

7. The gear mechanism as defined by one of claims 1 through 6,
**characterized in that**
a plurality of bodies (34), preferably two, three, four, five or six of them, are provided, which are distributed about the longitudinal axis (42) of the input shaft (10) and are operatively connected to a corresponding number of devices (70).

8. The gear mechanism as defined by one of claims 1 through 7,
**characterized in that**
the axial length of the body (34) and the axial length of the devices (70) are selected such that they correspond approximately to the thickness of the output body (50).

9. The gear mechanism as defined by one of claims 1 through 8,
**characterized in that**
the connection between the bodies (34) and the associated devices (70) can be made in the axial direction by means of plug-type connections.

10. The gear mechanism as defined by one of the foregoing claims,
**characterized in that**
an axial roller bearing is disposed at least between the plane-parallel face ends of the output body (50) and of the wheel (40) with the internal toothing (41).

11. The gear mechanism as defined by one of the foregoing claims,
**characterized in that**
the device (70) takes the form of an eccentric-ring- shaped sleeve and is disposed in the space between the body (34) and the opening (54), and one roller bearing each is disposed between the body (34) and the device (70) and/or between the device and the opening (54).

12. The gear mechanism as defined by one of the foregoing claims,
**characterized in that**
the eccentric portion (17, 17') of the input shaft (10) comprises at least one cylindrical crank pin, offset parallel by the eccentricity (e) relative to the longitudinal axis (42) of the input shaft (10), the diameter of which pin is equivalent at least to the diameter of the drive shaft, plus twice the value of the eccentricity (e).

13. The gear mechanism as defined by one of the foregoing claims,
**characterized in that**
the output body (50) is supported rotatably on its face end on the wheel (40) with the internal toothing (41).

14. The gear mechanism as defined by claim 13,
**characterized in that**
bearing races are provided at least on the axial faces, facing toward one another, of the output body (50) and of the wheel (40) with the internal toothing (41).

15. A gear mechanism having at least one wheel (40) with internal toothing (41), having at least one output body (50, 50') supported rotatably relative to the wheel (40), and having an input shaft (10) and a wheel (30) with external toothing (33) and meshing with the internal toothing, and when there are two output bodies (50, 50'), at least one wheel (30) is disposed between the output bodies (50, 50'), and having an arrangement, disposed between the wheel (30) and the output body (50, 50'), that transforms the planetary motion of the wheel (30) into a rotary motion of the output body, and the arrangement has at least one cylindrical body (34), which extends in the direction of the axial direction of the wheel (30) and is supported rotatably in a device (70),
**characterized in that**
the body (34) is operationally connected to the wheel (30);
that the device (70) is supported rotatably in an opening (54) in the output body (50, 50'); and
that the axis (34a) of the body (34) is spaced apart from the axis (54a) of the opening (54) by a spacing corresponding to the eccentricity (e);
that the input shaft (9) has at least one portion with external toothing (91) that meshes with a gear wheel (8), connected to the device (70), and the axis of the gear wheel (8) corresponds to the axis (54a) of the opening (54) in which the device (70) is disposed, so that a rotation of the input shaft causes a rotation of the device (70) about its axis (72a) in the opening (54), as a result of which the wheel (30) executes a combined rotary and eccentric motion; and
that the wheel (30) has a central opening (31), whose diameter corresponds at least to the diameter of the input shaft (9), plus twice the eccentricity (e).

16. The gear mechanism as defined by claim 15,
**characterized in that**
the outer and inner sheathing of the device (70) is cylindrical;
that the axis (54a) of the opening (54) coincides with the axis (72a) of the outer face (72) of the device (70); and
that the spacing of the axis (72a) of the outer face (72) of the device (70) from the axis (71a) of the cylindrical inner sheathing (71) corresponds to the eccentricity (e).

17. The gear mechanism as defined by one of the foregoing claims,
**characterized in that**
the output body (50) is supported rotatably on its face end on the wheel (40) with the internal toothing (41).

## Revendications

1. Transmission, avec au moins une roue (40) pourvue d'une denture intérieure (41), avec au moins un corps de sortie (50, 50') monté à rotation par rapport à la roue (40), avec un arbre d'entrée (10) pourvu d'au moins un segment excentrique (17, 17') ayant une excentricité (e), sur lequel est montée à rotation une roue (30) pourvue d'une denture extérieure (33) engrenant avec la denture intérieure, sachant qu'en présence de deux corps de sortie (50, 50'), au moins une roue (30) est disposée entre les corps de sortie (50, 50'), et avec un dispositif disposé entre la roue (30) et le corps de sortie (50, 50'), dispositif qui transforme le mouvement planétaire de la roue (30) en un mouvement de rotation du corps de sortie, sachant que le dispositif présente au moins un corps cylindrique (34) qui s'étend dans le sens de l'axe de la roue (30) et qui est monté à rotation dans un organe (70),
**caractérisée en ce que** le corps (34) est fonctionnellement relié à la roue (30),
**en ce que** l'organe (70) est monté à rotation dans une ouverture (54) du corps de sortie (50, 50'),
et **en ce que** l'axe (34a) du corps (34) est situé, par rapport à l'axe (54a) de l'ouverture (54), à une distance correspondant à l'excentricité (e).

2. Transmission selon la revendication 1, **caractérisée en ce que** les éléments du dispositif peuvent être reliés entre eux par complémentarité de forme.

3. Transmission selon la revendication 1 ou 2, **caractérisée en ce que** le corps (34), en forme de tourillon et disposé à distance de l'axe longitudinal (42) de l'arbre d'entrée (10), s'enfonce dans l'ouverture (54).

4. Transmission selon l'une des revendications 1 à 3, **caractérisée en ce que** l'organe (70) est réalisé en forme de cylindre creux.

5. Transmission selon la revendication 4, **caractérisée en ce que** l'organe (70) présente la forme d'une douille qui remplit sans jeu l'espace entre le corps (34) et l'ouverture (54).

6. Transmission selon l'une des revendications 1 à 5,
**caractérisée en ce que** l'enveloppe extérieure et l'enveloppe intérieure de l'organe (70) sont cylindriques,
**en ce que** l'axe (54a) de l'ouverture (54) coïncide avec l'axe (72a) de la surface extérieure (72) de l'organe (70),
et **en ce que** la distance entre l'axe (72a) de la surface extérieure (72) de l'organe (70) et l'axe (71a) de l'enveloppe intérieure cylindrique (71) correspond à l'excentricité (e).

7. Transmission selon l'une des revendications 1 à 6, **caractérisée en ce qu'**il est prévu plusieurs corps (34), de préférence deux, trois, quatre, cinq ou six corps (34), qui sont répartis autour de l'axe longitudinal (42) de l'arbre d'entrée (10) et qui sont en liaison fonctionnelle avec un nombre correspondant d'organes (70).

8. Transmission selon l'une des revendications 1 à 7, **caractérisée en ce que** la longueur axiale des corps (34) ainsi que la longueur axiale des organes (70) sont choisies de telle sorte qu'elles correspondent approximativement à l'épaisseur du corps de sortie (50).

9. Transmission selon l'une des revendications 1 à 8, **caractérisée en ce que** la liaison entre les corps (34) et les organes associés (70) peut être réalisée par des assemblages par emboîtement en direction axiale.

10. Transmission selon l'une des revendications précédentes, **caractérisée en ce qu'**un palier à roulement à charge axiale est disposé au moins entre les côtés frontaux à faces planes et parallèles du corps de sortie (50) et la roue (40) à denture intérieure (41).

11. Transmission selon l'une des revendications précédentes, **caractérisée en ce que** l'organe (70) présente la forme d'une douille excentrique et est disposé dans l'espace entre le corps (34) et l'ouverture (54), sachant qu'un palier à roulement respectif est disposé entre le corps (34) et l'organe (70) et/ou entre l'organe (70) et l'ouverture (54).

12. Transmission selon l'une des revendications précédentes, **caractérisée en ce que** le segment excentrique (17, 17') de l'arbre d'entrée (10) est constitué au moins d'un maneton cylindrique décalé en parallèle de l'excentricité (e) par rapport à l'axe longitudinal (42) de l'arbre d'entrée (10), maneton dont le diamètre correspond au moins au diamètre de l'arbre d'entraînement augmenté du double de la valeur de l'excentricité (e).

13. Transmission selon l'une des revendications précédentes, **caractérisée en ce que** le corps de sortie (50) est monté à rotation frontalement sur la roue (40) à denture intérieure (41).

14. Transmission selon la revendication 13, **caractérisée en ce que** des pistes de roulement sont prévues au moins sur les faces axiales en vis-à-vis du corps de sortie (50) et de la roue (40) à denture intérieure (41).

15. Transmission, avec au moins une roue (40) pourvue d'une denture intérieure (41), avec au moins un corps de sortie (50, 50') monté à rotation par rapport à la roue (40), avec un arbre d'entrée (10) et une roue (30) pourvue d'une denture extérieure (33) engrenant avec la denture intérieure, sachant qu'en présence de deux corps de sortie (50, 50'), au moins une roue (30) est disposée entre les corps de sortie (50, 50'), et avec un dispositif disposé entre la roue (30) et le corps de sortie (50, 50'), dispositif qui transforme le mouvement planétaire de la roue (30) en un mouvement de rotation du corps de sortie, sachant que le dispositif présente au moins un corps cylindrique (34) qui s'étend dans le sens de l'axe de la roue (30) et qui est monté à rotation dans un organe (70),
**caractérisée en ce que** le corps (34) est fonctionnellement relié à la roue (30),
**en ce que** l'organe (70) est monté à rotation dans une ouverture (54) du corps de sortie (50, 50'),
**en ce que** l'axe (34a) du corps (34) est situé, par rapport à l'axe (54a) de l'ouverture (54), à une distance correspondant à l'excentricité (e),
**en ce que** l'arbre d'entrée (9) présente au moins un segment pourvu d'une denture extérieure (91) avec laquelle engrène une roue dentée (8) reliée à l'organe (70), sachant que l'axe de la roue dentée (8) correspond à l'axe (54a) de l'ouverture (54) dans laquelle est disposé l'organe (70),
de sorte qu'une rotation de l'arbre d'entrée produit une rotation de l'organe (70) autour de son axe (72a) dans l'ouverture (54), ce qui fait que la roue (30) accomplit un mouvement combiné excentrique et de rotation,
et **en ce que** la roue (30) présente une ouverture centrale (31) dont le diamètre correspond au moins au diamètre de l'arbre d'entrée (9) augmenté du double de l'excentricité (e).

16. Transmission selon la revendication 15,
**caractérisée en ce que** l'enveloppe extérieure et l'enveloppe intérieure de l'organe (70) sont cylindriques,
**en ce que** l'axe (54a) de l'ouverture (54) coïncide avec l'axe (72a) de la surface extérieure (72) de l'organe (70),
et **en ce que** la distance entre l'axe (72a) de la surface extérieure (72) de l'organe (70) et l'axe (71a) de l'enveloppe intérieure cylindrique (71) correspond à l'excentricité (e).

17. Transmission selon l'une des revendications précédentes, **caractérisée en ce que** le corps de sortie (50) est monté à rotation frontalement sur la roue (40) à denture intérieure (41).
